# EUROPÄISCHE PATENTSCHRIFT

(11) **EP 3 419 862 B1**
(45) Veröffentlichungstag und Bekanntmachung des Hinweises auf die Patenterteilung: **07.04.2021**
(21) Anmeldenummer: 17705423.6
(22) Anmeldetag: 16.02.2017
(51) Int. Cl.: B60R 16/023, B60R 25/24

(54) **VERFAHREN FÜR EINE AKTIVIERUNG MINDESTENS EINER SICHERHEITSFUNKTION EINES SICHERHEITSSYSTEMS EINES FAHRZEUGS**
METHOD FOR AN ACTIVATION OF AT LEAST ONE SAFETY FUNCTION OF A SAFETY SYSTEM OF A VEHICLE
PROCÉDÉ D'ACTIVATION D'AU MOINS UNE FONCTION DE SÉCURITÉ D'UN SYSTÈME DE SÉCURITÉ DE VÉHICULE

(30) Priorität: 26.02.2016 DE 102016103471
(43) Veröffentlichungstag der Anmeldung: 02.01.2019
(73) Patentinhaber: HUF Hülsbeck & Fürst GmbH & Co. KG, 42551 Velbert (DE)
(72) Erfinder: BREER, Jan, 45259 Essen (DE); FELDSIEPER, Marc, 45529 Hattingen (DE); IHLN, Matthias, 40223 Düsseldorf (DE); NEUHOFF, Stefan, 45239 Essen (DE); SCHINDLER, Mirko, 42549 Velbert (DE); SKALETZ, Thomas, 40668 Meerbusch (DE); ZILLER, Boris, 40885 Ratingen (DE)
(74) Vertreter: Bals, Rüdiger
(86) Internationale Anmeldenummer: PCT/EP2017/053555
(87) Internationale Veröffentlichungsnummer: WO 2017/144349

(56) Entgegenhaltungen:
- EP-A1- 0 892 134
- EP-A1- 1 943 117
- EP-A1- 3 136 370
- DE-A1- 10 012 113
- DE-A1- 10 334 625
- DE-A1-102004 052 787
- DE-A1-102012 024 880
- DE-A1-102012 112 808

## Beschreibung

Die vorliegende Erfindung betrifft ein Verfahren für eine Aktivierung mindestens einer Sicherheitsfunktion eines Sicherheitssystems eines Fahrzeuges nach dem Oberbegriff des Anspruchs 1. Ferner bezieht sich die Erfindung auf einen mobilen Identifikationsgeber nach dem Oberbegriff des Anspruchs 11 sowie auf ein Sicherheitssystem gemäß des unabhängigen Vorrichtungsanspruchs.

Mobile Identifikationsgeber (ID-Geber) werden als elektronische Schlüssel eingesetzt, um als Alternative zum mechanischen Schlüssel eine Entriegelung eines Sicherheitssystems eines Fahrzeuges zu ermöglichen. Weiter können ID-Geber noch für zahlreiche weitere Aufgaben bei Fahrzeugen zum Einsatz kommen, um den Bedienerkomfort und die Sicherheit zu erhöhen. Üblicherweise werden zur Kommunikation des ID-Gebers mit dem Fahrzeug (bzw. mit dem Sicherheitssystem des Fahrzeuges) Infrarotsysteme oder Funksysteme im Niederfrequenzbereich eingesetzt. Dadurch lassen sich Authentifizierungsdaten kontaktlos (drahtlos) übertragen und so bspw. die Zugangsdaten prüfen, um eine Entriegelung bei positiver Authentifizierung zu ermöglichen.

Die Authentifizierung kann bspw. durch einen Benutzer des Fahrzeuges mittels Knopfdruck initiiert werden. Durch diese aktive Betätigung des Identifikationsgebers durch den Benutzer wird das Signal mit den Authentifizierungsinformationen, z. B. mit Zugangsdaten, wie einem Code, an eine fahrzeugseitige Elektronik des Sicherheitssystems versendet. Solche Systeme werden auch als Active-Keyless-Entry-Systeme bezeichnet (wenn z. B. aktiv ein Knopf gedrückt werden muss). Neben den Active-Keyless-Entry-System werden zunehmend auch Sicherheitssysteme mit der sogenannten Passive-Keyless-Entry- oder Keyless-Go-Funktionalität verwendet. Im Gegensatz zur konventionellen Fernbedienung ist bei der Passive-Keyless-Entry-Funktionalität keine aktive Bedienung des ID-Gebers (gemeint ist ohne Knopfdruck) durch den Benutzer notwendig. Bspw. bei Annäherung des Benutzers oder bei Betätigung eines Türgriffs kann ein Wecksignal vom Fahrzeug über eine Funkverbindung, insbesondere über eine LF (Low Frequency/Niederfrequenz)-Funkverbindung, zum Identifikationsgeber übertragen werden. Daraufhin wird der ID-Geber geweckt und sendet ein Funksignal mit dem Code zur Authentifizierung an das Sicherheitssystem des Fahrzeuges.

Es hat es sich als Nachteil herausgestellt, dass bei derartigen Systemen, insbesondere bei Keyless-Go Systemen, aufwendige Sicherheitsmechanismen implementiert werden müssen, um das Fahrzeug, insbesondere die Sicherheitssysteme, vor Manipulation und Diebstahl zu schützen. Bspw. müssen Vorkehrungen getroffen werden, um zu verhindern, dass über einen sogenannten "Relay-Station-Attack" Angriff unbefugt eine Sicherheitsfunktion des Fahrzeuges, wie die Entriegelung und/oder der Motorstart des Fahrzeuges, aktiviert wird. Hierzu sind komplexe und kostenaufwendige Maßnahmen notwendig, welche es bspw. ermöglichen, einen tatsächlichen Abstand zwischen dem ID-Geber und dem Fahrzeug zu bestimmen. Eine Ermittlung und Auswertung derartiger Abstandsinformationen ist allerdings häufig zu ungenau und/oder unzuverlässig.

DE 100 12 113 A1 offenbart ein Verfahren und Vorrichtung zur Datenübertragung und/oder Abstandsmessung zwischen einer Basiseinheit und einer mobilen Schlüsseleinheit eines Zugangsberechtigungskontrollsystems, insbesondere für Kraftfahrzeuge.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine kostengünstige, sicherere und/oder zuverlässigere Aktivierung von Sicherheitsfunktionen eines Fahrzeuges zu ermöglichen. Insbesondere soll die Genauigkeit und/oder Sicherheit bei der Abstandsermittlung und/oder Auswertung der Abstandsinformation erhöht werden.

Die voranstehende Aufgabe wird gelöst durch ein Verfahren mit den Merkmalen des Anspruchs 1, einen mobilen Identifikationsgeber mit den Merkmalen des Anspruchs 11 sowie durch ein Sicherheitssystem mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen mobilen Identifikationsgeber sowie dem erfindungsgemäßen Sicherheitssystem, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren für eine, vorzugsweise schlüssellose und/oder Passive-Keyless-Entry- und/oder Keyless-Go-, Aktivierung mindestens einer Sicherheitsfunktion eines, bevorzugt schlüssellosen und/oder Passive-Keyless-Entry- und/oder Keyless-Go-, Sicherheitssystems eines Fahrzeuges,
wobei mindestens einer der nachfolgenden Schritte vorgesehen ist, welche bevorzugt nacheinander oder in beliebiger Reihenfolge durchgeführt werden:
a) Erfassen zumindest einer Abstandsinformation über einen Abstand eines mobilen Identifikationsgebers zu dem Fahrzeug durch eine Erfassungsvorrichtung des Fahrzeuges,
b) Übertragen der Abstandsinformation durch eine Datenübertragung von der Erfassungsvorrichtung über ein (insbesondere nur ein einziges) Übertragungssystem des Fahrzeuges an eine, bevorzugt zentrale, Verarbeitungsvorrichtung, z. B. eine zentrale Fahrzeugelektronik, des Fahrzeuges. Bevorzugt erfolgt die Datenübertragung direkt, also insbesondere ohne eine Änderung der Übertragungsart.

Hierbei ist insbesondere vorgesehen, dass die Datenübertragung der Abstandsinformation fälschungssicher und/oder abhörsicher durchgeführt wird. Somit kann eine erhöhte Sicherheit bei dem Betrieb des Sicherheitssystems gewährleistet werden. Bevorzugt wird die übertragene Abstandsinformation für eine Abstandsermittlung, insbesondere durch das Fahrzeug und/oder die Verarbeitungsvorrichtung, herangezogen und/oder ausgewertet, z. B. zur Ermittlung des Abstands und somit zur Lokalisierung des ID-Gebers, wobei insbesondere in Abhängigkeit von der Lokalisierung und/oder Auswertung die Sicherheitsfunktion des Sicherheitssystems aktiviert wird.

Bevorzugt erfolgt dabei die Aktivierung der Sicherheitsfunktion in Abhängigkeit von einer Sicherheitsinformation, welche z. B. in Abhängigkeit von der Abstandsinformation ermittelt wird. Z. B. umfasst dabei die Sicherheitsinformation eine Information, ob sich der ID-Geber innerhalb einer Sicherheitszone um das Fahrzeug befindet und/oder ein maximaler Abstand zwischen dem Fahrzeug und dem ID-Geber nicht überschritten wird. Bevorzugt erfolgt die Aktivierung der Sicherheitsfunktion nur dann, wenn sich der ID-Geber innerhalb dieser Sicherheitszone befindet und/oder weitere Bedingungen vorliegen, wie z. B. die positive Überprüfung eines Authentifizierungscodes oder dergleichen, welcher ebenfalls verschlüsselt übertragbar sein kann. Die Sicherheitszone erstreckt sich dabei bspw. um das Fahrzeug, insbesondere mit einem bestimmten maximalen Radius (ausgehend vom Fahrzeug). Dies ermöglicht eine Verbesserung der Sicherheit bei der Authentifizierung, insbesondere bei einer Nutzung einer schlüsselosen Aktivierung. Die schlüssellose Aktivierung der Sicherheitsfunktion bezieht sich bevorzugt darauf, dass das Fahrzeug ohne aktive Benutzung eines ID-Gebers (z. B. Autoschlüssels) entriegelt und/oder durch das bloße Betätigen des Startknopfes gestartet werden kann. Eine solche schlüssellose Aktivierung ist bspw. durch die so genannte Passive-Entry/Passive-Start (PE/PS)-Funktionalität umfasst.

Vorzugsweise sind die Erfassungsvorrichtung und/oder das Übertragungssystem fahrzeugseitig, d. h. im oder am Fahrzeug, vorgesehen. Der mobile ID-Geber ist in der Regel nicht im oder am Fahrzeug fest angeordnet, es sei denn dieser ist in ein Schloss oder in eine entsprechende Aufnahme durch seinen Benutzer eingesteckt worden. Ansonsten kann der mobile ID-Geber ortsungebunden vom Fahrzeug mitgenommen werden.

Besonders bevorzugt umfasst die Erfassungsvorrichtung wenigstens eine Kommunikationsvorrichtung, welche z. B. eine Funk-Kommunikationsvorrichtung zur Funk-Kommunikation ist. Entsprechend kann es vorgesehen sein, dass die Erfassungsvorrichtung in direkter Weise zur Erfassung der Abstandsinformation und/oder zur Abstandsermittlung dient. Insbesondere ist somit die Erfassungsvorrichtung der (z. B. zeitlich) erste Kommunikationsteilnehmer, bei welchem die Daten zur Abstandsermittlung und/oder die Abstandsinformation fahrzeugintern und/oder kabelgebunden, d. h. nicht mehr über Funk, übertragen werden. Besonders bevorzugt umfasst die Erfassungsvorrichtung eine Schnittstelle für den Übergang von einer Funk-Kommunikation zu einer kabelgebundenen und/oder fahrzeuginternen Kommunikation. So kann die Erfassungsvorrichtung bspw. mindestens ein Kommunikationsteil, wie eine Antenne, aufweisen, welche einen physikalischen Übergang zwischen der Funkübertragung (d. h. auch drahtlose bzw. leitungslose Übertragung) und der kabelgebundenen Übertragung (d. h. auch kabel- oder drahtgebundene Übertragung) darstellt. Vor der Erfassung der Abstandsinformation durch die Erfassungsvorrichtung ist die Fälschung und/oder Manipulation dabei bspw. schon durch die Art der Kommunikation (wie Funk) und/oder durch eine weitere Funksignalverschlüsselung erschwert und/oder verhindert. Dagegen weist insbesondere die Datenübertragung (nach der Erfassung der Abstandsinformation) von der Erfassungsvorrichtung über das Übertragungssystem an die Verarbeitungsvorrichtung ein höheres übertragungsartspezifisches Sicherheitsrisiko auf, insbesondere bezogen auf die Fälschung und/oder Manipulation der übertragenden Abstandsinformationen. Mit anderen Worten ist die Art der Datenübertragung (z. B. die drahtgebundene Übertragung fahrzeugintern innerhalb des Fahrzeugs) bezogen auf eine Manipulation und/oder Fälschung manipulationsanfälliger. Diesem höheren Risiko wird durch die fälschungssichere und/oder manipulationssichere Durchführung der Datenübertragung der Abstandsinformation begegnet, wodurch eine erhöhte Sicherung bei der Abstandsermittlung und/oder Aktivierung der Sicherheitsfunktion gewährleistet werden kann.

Des Weiteren ist es im Rahmen der Erfindung optional möglich, dass die nachfolgenden Schritte nach Schritt b) durchgeführt werden, bevorzugt nacheinander oder in beliebiger Reihenfolge:
c) Auswerten der Abstandsinformation durch die Verarbeitungsvorrichtung, wodurch eine Lokalisierung des Identifikationsgebers relativ zu mindestens einer Sicherheitszone des Fahrzeuges in Abhängigkeit von der Abstandsinformation erfolgt,
d) Bestimmen einer Sicherheitsinformation für das Sicherheitssystem in Abhängigkeit von der Lokalisierung,
wobei die Datenübertragung der Abstandsinformation derart fälschungssicher durchgeführt wird, dass die Abstandsinformation für die Lokalisierung vor unberechtigter Manipulation geschützt wird. Hierzu erfolgt die Datenübertragung der Abstandsinformation bspw. verschlüsselt, wobei insbesondere die Abstandsinformation durch ein Verschlüsselungsverfahren, wie z. B. RSA, codiert wird. Besonders bevorzugt erfolgt eine Codierung der Abstandsinformation derart, dass ausschließlich die Verarbeitungsvorrichtung des Fahrzeugs die zur Decodierung notwendige (Schlüssel-) Information umfasst. Die, insbesondere fahrzeuginterne, Datenübertragung der Abstandsinformation kann bspw. vollständig und/oder grundsätzlich fälschungssicher und/oder verschlüsselt erfolgen, bevorzugt mit einer anderen Art der Verschlüsselung, als bei der Funk-Kommunikation eingesetzt wird. Dies ermöglicht eine deutliche Reduzierung des Sicherheitsrisikos bei der fahrzeuginternen Kommunikation.

Es ist vorzugsweise vorgesehen, dass eine (z. B. erste und/oder zweite) Kommunikation zwischen dem Identifikationsgeber und dem Fahrzeug erfolgt, insbesondere über eine Funkverbindung, bevorzugt mittels eines breitbandigen Kommunikationsverfahren, z. B. Ultrabreitband. Die über die Kommunikation bzw. Funkverbindung übertragbaren und/oder übertragenen Funksignale umfassen z. B. mindestens eines der folgenden Signale:
- ein Wecksignal,
- ein Authentifizierungssignal,
- Daten einer Datenübertragung,
- eine Abstandsinformation,
- Komfortinformationen (z. B. zur Ansteuerung einer Beleuchtung des Fahrzeuges),
- Benutzerinformationen über den Benutzer des Fahrzeuges und/oder benutzerspezifische Fahrzeug(vor-)einstellungen,
- Navigationsinformationen,
- GPS-Informationen (GPS, engl. Global Positioning System),
- Verschlüsselungsinformationen (z. B. einen Verschlüsselungscode),
- Signale zur Abstandsermittlung, insbesondere eine Abfrageinformation und/oder eine Antwortinformation.

Diese Signale, die ebenfalls verschlüsselt sein können, werden bspw. mittels der Ultrabreitband-Technologie (UWB, engl. ultra-wideband) übertragen und sind somit insbesondere als UWB-Signale ausgeführt.

Insbesondere erfolgt zur Kommunikation (z. B. zur Initiierung) eine erste Signalübertragung über eine erste Kommunikation und anschließend (z. B. zur Antwort) eine zweite Signalübertragung über eine zweite Kommunikation, wobei sich die Funkfrequenzen und/oder die Kommunikationsart der ersten Kommunikation und der zweiten Kommunikation unterscheiden. Des Weiteren kann es vorgesehen sein, dass die Kommunikation eine Lokalisierung (z. B. des ID-Gebers) ermöglicht. So ermöglicht die Kommunikation, insbesondere gemäß der UWB-Technologie, eine verschlüsselte und/oder hochgenaue und/oder abhörsichere Lokalisation bspw. des ID-Gebers. Die Lokalisation basiert vorzugsweise auf einer "Time-of-Flight" Messung, insbesondere unter "Line-of-Sight"-Bedingungen, wobei zur Lokalisation und/oder Auswertung bevorzugt die Lichtgeschwindigkeit und/oder die Signalgeschwindigkeit der Kommunikation Berücksichtigung findet. Besonders bevorzugt erfolgt die Lokalisierung mit einer Auflösung und/oder Genauigkeit im Bereich von 1 cm bis 100 cm, vorzugsweise 10 cm bis 50 cm, besonders bevorzugt 5 cm bis 15 cm. Unter der "Line-of-Sight"-Bedingung wird insbesondere verstanden, dass die Übertragung der Funksignale (z. B. nur bzw. ausschließlich) mit und/oder bei direktem Sichtkontakt zwischen Sender und Empfänger erfolgt. Bspw. kann die Sicherheit dadurch erhöht werden, dass die (erste und/oder zweite) Kommunikation nur unter "Line-of-Sight"-Bedingungen erfolgt.

Sender und/oder Empfänger der (ersten und/oder zweiten) Kommunikation sind vorzugsweise eine Kommunikationsvorrichtung und/oder Erfassungsvorrichtung des Fahrzeuges sowie eine Sende-Empfangsvorrichtung des ID-Gebers. Die Erfassungsvorrichtung ist vorzugsweise eine Abstandsmessungsvorrichtung des Fahrzeuges, d. h. eine Vorrichtung, welche die Abstandsermittlung (z. B. zwischen ID-Geber und Fahrzeug) und/oder den Empfang der Abstandsinformation (direkt) ermöglicht. Insbesondere ist die Kommunikationsvorrichtung und/oder Erfassungsvorrichtung elektrisch und/oder per Funk mit einer Verarbeitungsvorrichtung verbindbar, wobei über die Verbindung und/oder die Verarbeitungsvorrichtung z. B. weitere Schritte zur Abstandsermittlung und/oder eine Auswertung der Abstandsermittlung bzw. Abstandsinformation erfolgen. Die Kommunikationsvorrichtung und/oder eine Verschlüsselungseinheit und/oder die Erfassungsvorrichtung und/oder die Verarbeitungsvorrichtung und/oder der ID-Geber umfasst vorzugsweise ein oder mehrere Elektronikkomponenten, wie z. B. mindestens einen integrierten Schaltkreis und/oder eine Zufallsgeneratoreinheit und/oder einen Mikroprozessor und/oder einen ASIC (anwendungsspezifische integrierte Schaltung) und/oder einen digitalen Signalprozessor und/oder einen Korrelationsempfänger und/oder dergleichen, um z. B. die Abstandsinformation mittels arithmetischer Informationen auszuwerten und/oder zu generieren. Die Zufallsgeneratoreinheit umfasst z. B. einen physikalischen und/oder einen deterministischen Zufallsgenerator, vorzugsweise mit mindestens 10-Bit oder mindestens 100 Bit oder mindestens 500 Bit Seed (Startwert) Entropie, um eine besonders zuverlässige Verschlüsselung zu ermöglichen.

Vorzugsweise ist das Fahrzeug als ein Kraftfahrzeug oder als ein Personenkraftfahrzeug oder als ein Lastkraftfahrzeug oder als ein Elektrofahrzeug oder als ein Hybridfahrzeug ausgebildet. Das Sicherheitssystem umfasst bevorzugt ein Zugangssystem und/oder eine Zentralverriegelung und/oder eine Verriegelungsvorrichtung und/oder ein Schließsystem des Fahrzeuges und/oder ist mit den elektrisch ansteuerbaren Türschlössern und/oder Schließelementen beispielsweise zum automatischen Öffnen des Kofferraumdeckels oder zum Verriegeln der Türen des Fahrzeuges elektrisch verbunden. Vorzugsweise weist das Fahrzeug eine Steuereinheit auf, die mit der Bordelektronik verbunden ist. Die Steuereinheit kann den Authentifizierungsvorgang bzw. die Authentifizierungsabfrage mit dem ID-Geber durchführen. Hierbei kann die Steuereinheit unmittelbar in der Verriegelungsvorrichtung, oder an einer weiteren relevanten Stelle des Fahrzeuges angeordnet sein. Insbesondere ist es vorgesehen, dass falls die Authentifizierung negativ sein sollte, keine Änderung des Zustandes der Verriegelungsvorrichtung erfolgt. Somit wird wirksam verhindert, dass unberechtigte Personen die Verriegelungsvorrichtung in den Entriegelungszustand bringen. Vorteilhafterweise ist das Zugangskontrollsystem mit einem Schließsystem verbunden, welches unter anderem die Fahrzeugtüren, Heckklappe, und dergleichen verriegeln und entriegeln kann. Nach einer positiven Authentifizierung erfolgt eine Entriegelung der Fahrzeugtür und/oder der Heckklappe, so dass der Benutzer (Bediener) die Tür, Heckklappe aktiv öffnen kann.

Ferner ist es denkbar, dass die Lokalisierung und/oder Abstandsinformation durch ein weiteres externes Gerät auswertbar ist. Insbesondere kann es vorgesehen sein, dass der ID-Geber und/oder das Fahrzeug eine Schnittstelle umfasst, welche mit dem externen Gerät elektrisch und/oder über Funk verbindbar ist, wobei insbesondere über die Schnittstelle eine (Daten-) Übertragung, insbesondere der Abstandsinformation oder einer davon abhängigen Information, erfolgt. Bevorzugt wird die übertragene (Abstands-) Information dazu genutzt, um darauf basierend einem Benutzer des externen Geräts eine Information anzuzeigen bzw. auszugeben, welche das Auffinden des ID-Gebers ermöglicht.

Bevorzugt wird die erste und/oder zweite Kommunikation mittels der Ultrabreitband-Technologie (kurz: Ultrabreitband bzw. UWB) durchgeführt. Die Kommunikation mittels UWB basiert dabei insbesondere auf der technischen Überlegung, dass sich die Kanalkapazität linear mit der Bandbreite des Sendesignals und logarithmisch mit dessen Leistung erhöht. Bspw. ist bei Kommunikationstechnologien wie Bluetooth die verfügbare Bandbreite schmal und konstant. UWB nutzt dagegen einen sehr breiten Frequenzbereich, um bei reduzierter Sendeleistung eine hohe Kanalkapazität zu ermöglichen. Dies hat den Vorteil, dass eine Datenübertragung bei sehr geringer Leistungsaufnahme durch den (UWB-) Sender erfolgen kann. Die maximale Ausgangsleistung eines UWB-Senders, wie z. B. der (ersten und/oder zweiten) Kommunikationseinheit, beträgt dabei z. B. 1 mW.

Insbesondere kommt zur Kommunikation, z. B. zur ersten und/oder zweiten Kommunikation, insbesondere zur Datenübertragung, ein Multiplexverfahren, vorzugsweise ein Frequenzmultiplexverfahren wie ein Orthogonal Frequency Division Multiplexing (OFDM) Verfahren und/oder ein Codemultiplexverfahren wie ein Code Division Multiple Access Verfahren, insbesondere Direct-Sequence-Code Division Multiple Access (DS-CDMA), zum Einsatz. Bevorzugt werden zur Signal- und/oder Datenübertragung drahtlos impulsförmige Signale übertragen. Dabei erfolgt z. B. auch eine Verschiebung der Pulse mittels (pseudo)zufälligen Werten, wobei dann (UWB-) Sender und (UWB-) Empfänger die gleichen Werte zur Verschiebung berücksichtigen. Vorzugsweise erfolgt vor oder bei Beginn der Signal- und/oder Datenübertragung eine zeitliche Synchronisation von (UWB-) Sender und (UWB-) Empfänger. Sender und/oder Empfänger, insbesondere UWB-Sender und/oder UWB-Empfänger, können bspw. eine (erste und/oder zweite) Kommunikationseinheit und/oder die zugehörigen Kommunikationsschnittstellen und/oder eine Kommunikationsvorrichtung (des Fahrzeuges) und/oder eine Sende-Empfangsvorrichtung und/oder eine (erste und/oder zweite) Sende-Empfangseinheit (des ID-Gebers) sein und/oder umfassen. Zur Auswertung des empfangenen Signals umfasst der (UWB-) Sender und/oder der (UWB-) Empfänger z. B. Elektronikkomponenten wie Komparatoren zum Vergleich empfangener Impulse und/oder Korrelationsempfänger und/oder integrierte Schaltkreise und/oder Mikroprozessoren und/oder Elektronikkomponenten zur Durchführung einer Fast Fourier Transformation.

Die Übertragung einer Abstandsinformation und/oder die Kommunikation des ID-Gebers mit dem Fahrzeug und/oder mit dem Sicherheitssystem des Fahrzeuges, insbesondere die Datenübertragung sicherheitsrelevanter Daten, und/oder die Abstandsermittlung, insbesondere mittels UWB, erfolgt vorzugsweise verschlüsselt. Hierzu kommen bevorzugt kryptographische Sicherheitsmechanismen wie RSA zum Einsatz, welche z. B. Verbindungsschlüssel und/oder Authentifizierungsmechanismen und/oder die Nutzung geheimer (privater) und öffentlicher Schlüssel und/oder ein symmetrisches und/oder asymmetrisches Kryptosystem und/oder eine hybride Verschlüsselung umfassen. Es wird somit der Vorteil erzielt, dass eine sichere und zuverlässige Übertragung möglich ist.

Die Kommunikation über das breitbandige Kommunikationsverfahren, vorzugsweise über UWB, und/oder mittels des breitbandigen Kommunikationssignals, erfolgt bevorzugt über mindestens einen großen Frequenzbereich, bevorzugt mit einer (insgesamten) Bandbreite von (mindestens) 500 MHz bis 900 MHz und/oder (mindestens) 3.5 GHz bis 10 GHz und/oder mindestens 5 GHz und/oder mindestens 2 GHz und/oder mindestens 1 GHz und/oder mindestens 500 MHz und/oder von mindestens 40 % und/oder mindestens 30 % und/oder mindestens 20 % und/oder mindestens 10 % des arithmetischen Mittelwertes von unterer und oberer Grenzfrequenz des genutzten Frequenzbandes. Die insgesamte Bandbreite kann sich dabei z. B. aus der Bandbreite von einzelnen Frequenzbändern zusammensetzen, welche gemeinsam zur Kommunikation genutzt werden, oder die Bandbreite eines einzigen zur Kommunikation genutzten Frequenzbandes bezeichnen. Bspw. kann der Frequenzbereich im Bereich von 0 bis 40 GHz, insbesondere 500 MHz bis 900 MHz, bevorzugt 3,5 GHz bis 10 GHz, vorzugsweise 3,5 GHz bis 6,8 GHz, bevorzugt 20 MHz bis 11 GHz, besonders bevorzugt 30 MHz bis 10,6 GHz und/oder 22,0 GHz bis 26,7 GHz und/oder 1 MHz bis 12,4 GHz und/oder im Wesentlichen 700 MHz genutzt werden. Weiter kann es vorgesehen sein, dass für die (UWB-) Kommunikation der maximale Mittelwert der spektralen Leistungsdichte im Bereich zwischen -90,0 dBm/MHz und -20,0 dBm/MHz liegt, vorzugsweise maximal - 41,3 dBm/MHz. Die Datenübertragungsrate zur Datenübertragung beträgt vorzugsweise mindestens 1 Mbit/s oder mindestens 4 Mbit/s oder mindestens 6 Mbit/s, insbesondere maximal 6,8 Mbit/s oder 10 Mbit/s. Somit ist eine schnelle und störungssichere Übertragung möglich.

Vorzugsweise werden zur (insbesondere UWB-) Kommunikation Pulse ausgesendet. Der Abstand zwischen den Pulsen kann zweckmäßigerweise um Größenordnungen höher als die Pulslänge sein. Es ist dabei denkbar, dass zur Datenübertragung eine Pulsweitenmodulationstechnik und/oder eine Pulsphasenmodulationstechnik genutzt werden. Dies gewährleistet eine schnelle, zuverlässige und/oder sichere Datenkommunikation.

Es kann ferner vorgesehen sein, dass gemäß der UWB-Kommunikation auch die Abstandsermittlung mittels einer Entfernungsmessung wie einer Laufzeitanalyse eines (UWB-) Funksignals erfolgt. Insbesondere kann hier ein Frequenzbereich von 22,0 GHz bis 26,6 GHz eingesetzt werden. Die Mittenfrequenz kann bspw. im Frequenzbereich von ca. 1 GHz bis 15 GHz liegen und eine Frequenzbandbreite von zumindest 500 MHz vorgesehen sein.

Weiter kann es im Rahmen der Erfindung möglich sein, dass die Sende-Empfangsvorrichtung des ID-Geber über eine Funkverbindung ein Signal von dem Fahrzeug (z. B. von dem fahrzeugseitigen Sicherheitssystem und/oder der Kommunikationsvorrichtung) empfängt, und vorzugsweise derart mit einer Verarbeitungseinheit verbunden und/oder verbindbar ist, dass das über die Funkverbindung durch die Sende-Empfangsvorrichtung empfangene Signal, insbesondere ein Wecksignal und/oder eine Information zur Abstandsermittlung, von der Verarbeitungseinheit auswertbar ist. Es ist dabei denkbar, dass die Funkverbindung eine erste Funkverbindung einer ersten Kommunikation (wie eine UWB-Funkverbindung) einer ersten Sende-Empfangseinheit und/oder eine zweite Funkverbindung einer zweiten Kommunikation (wie eine LF- und/oder HF-Funkverbindung) einer zweiten Sende-Empfangseinheit der Sende-Empfangsvorrichtung ist. Insbesondere kann die Sende-Empfangsvorrichtung und/oder die Verarbeitungseinheit aufgrund des Empfangs des Signals geweckt werden. Wecken bezeichnet insbesondere die Aktivierung von Funktionen und/oder Komponenten des ID-Gebers oder auch die Überführung von einem Ruhezustand in einen Wachzustand, z. B. mit höherem Energieverbrauch. Das (Weck-) Signal kann insbesondere eine Kommunikation des ID-Gebers mit dem Sicherheitssystem auslösen.

Insbesondere kann das (fahrzeugseitige) Sicherheitssystem ein Zugangssystem (z. B. Zentralverriegelung für die Fahrzeugtüren) aufweisen, welches Active-Keyless-Entry-, Passive-Keyless-Entry- oder Keyless-Go-Funktionalität besitzt. Das Sicherheitssystem dient z. B. der schlüssellosen Aktivierung mindestens einer Sicherheitsfunktion, insbesondere eines Zugangssystems des Fahrzeuges, insbesondere Kraftfahrzeuges. Dazu ist insbesondere ein durch das (Weck-) Signal initiierter bzw. sich dem Empfang des (Weck-) Signals anschließender Authentifizierungsvorgang und/oder eine Abstandsermittlung (mit positivem Ergebnis) zur Aktivierung notwendig. Das positive Ergebnis betrifft z. B. eine erfolgreiche Codeüberprüfung und/oder Codeübereinstimmung bei der Authentifizierung und/oder einen durch die Abstandsermittlung bestimmten Abstand des ID-GEbers zum Fahrzeug, welcher geringer sein muss als ein Maximalabstand. Durch den Authentifizierungsvorgang können Funktionen, insbesondere Sicherheitsfunktionen, des Sicherheitssystems des Fahrzeuges aktiviert werden, wie z. B. ein Öffnen oder Schließen einer Schließvorrichtung des Fahrzeugs, z. B. auch Türen oder Klappen im Heck und/oder Seitenbereich des Fahrzeugs, ein Starten des Motors oder ein Aktivieren bzw. Deaktivieren der Wegfahrsperre.

Das (Weck-) Signal wird z. B. von zumindest einer fahrzeugseitigen Kommunikationsvorrichtung und/oder Erfassungsvorrichtung des Sicherheitssystems ausgesendet. Dazu können bspw. Kommunikationsteile, insbesondere Antennen in verschiedenen Bereichen des Fahrzeugs vorgesehen sein, z. B. außerhalb des Fahrzeugs, im Innenraum, an den Türen, insbesondere den Türgriffen, am Dach, im Heck und/oder Seitenbereich des Fahrzeuges oder im Kofferraum. Wenn das (Weck-) Signal über eine UWB- und/oder LF-Funkfrequenz versendet wird, ist die Reichweite stark begrenzt und wird auch durch die Fahrzeugkarosserie stark abgeschwächt und/oder (vollständig) abgeschirmt. Dies ermöglicht z. B. auch eine Abstandsermittlung. Dadurch ist es ferner auch möglich, dass ein das (Weck-) Signal empfangendes Gerät (z. B. ein ID-Geber) innerhalb oder außerhalb des Fahrzeugs geortet werden kann, und vorzugsweise die Ortung innerhalb des Fahrzeuges von der Ortung außerhalb des Fahrzeuges unterschieden werden. Unterstützend kann bspw. auch eine weitere Methode zur Abstandsermittlung zum Einsatz kommen, wie eine Auswertung der Signalstärke oder Signallaufzeit ("Time-of-Flight"). Es wird nach der Ortung und/oder dem Empfang des Signals und/oder der Abstandsermittlung (bei positiven Ergebnis) bspw. ein Authentifizierungsvorgang initiiert, welcher insbesondere das Senden eines Antwortsignals an das Sicherheitssystem umfasst, wobei das Antwortsignal z. B. einen Code (Zugangscode) zur Identifikationsprüfung enthalten kann. Das Antwortsignal wird z. B. von der fahrzeugseitigen Kommunikationsvorrichtung oder von einer anderen fahrzeugseitigen Elektronik empfangen und ausgewertet. Es ist vorzugsweise bei dem ID-Geber, insbesondere bei einer Sende-Empfangsvorrichtung des ID-Gebers und/oder der (ersten und/oder zweiten) Sende-Empfangseinheit, eine UWB- und/oder LF-Antenne vorgesehen, die das (Weck-) Signal vom Fahrzeug empfangen kann. Es kann eine Antenne des ID-Gebers, bspw. eine UWB- und/oder LF-Antenne, zum Empfang und eine separate bzw. die gleiche Antenne zum Senden von Signalen vorgesehen sein.

Es können ferner vorzugsweise Kommunikationsteile vorgesehen sein, welche jeweils ein oder mehrere Antennen, insbesondere UWB-Antennen, aufweisen. Dabei ist es denkbar, dass zur (insbesondere UWB-) Kommunikation ein MIMO (Multiple Input Multiple Output) Verfahren vorgesehen ist, sodass mehrere Sende- und/oder Empfangsantennen genutzt werden. Es ist z. B. eine Signalverarbeitung für die durch die Antennen empfangenen Signale vorgesehen. Bevorzugt sind dabei die Kommunikationsteile am Fahrzeug derart angeordnet, dass eine Durchführung eines MIMO Verfahrens möglich ist.

Es ist denkbar, dass das Kommunikationsteil, insbesondere die jeweilige Antenne, derart ausgestaltet ist, dass die Bauform und/oder die Antennenparameter und/oder die Antennenbauform und/oder die Länge und/oder die Ausdehnung der Antenne an das UWB-Verfahren und/oder die zur Kommunikation verwendete (insbesondere UWB-) Bandbreite angepasst ist. So ist es z. B. möglich, dass zumindest eine der jeweiligen Antennen als lineare Antenne und/oder als Flächenantenne und/oder als Gruppenantenne ausgeführt ist. Insbesondere ist die Länge der Antenne dabei der für die Kommunikation verwendeten Mittenfrequenz und/oder Pulslänge angepasst. Die Antennenbauform der Antenne kann dabei insbesondere eine UWB-spezifische Bauform, z. B. eine Rugby-Ball Antenne oder in einer Tapered Slot Bauweise, sein.

Bevorzugt kann das Kommunikationsteil, insbesondere die Antenne, eine planare, metallische Struktur und/oder mindestens einen Wellenleiter aufweisen. Ferner ist es denkbar, dass das Kommunikationsteil / die Antenne derart ausgestaltet ist, dass ein Senden und/oder Empfangen von Hochfrequenzsignalen durchführbar ist. Die Antenne kann bspw. als eine omnidirektionale Antenne ausgeführt sein. Auch kann das Kommunikationsteil bzw. die Antenne eine Richtwirkung aufweisen, und hierzu mindestens ein Dipolelement, insbesondere einen dreidimensionales Dipolelement, umfassen.

Eine Datenübertragung kann weiter vorzugsweise derart erfolgen, dass eine UWB-spezifische Modulationsart genutzt wird. Eine solche Modulationsart ist bspw. eine Pulsweitenmodulation und/oder eine Pulsphasenmodulation. Des Weiteren ist es denkbar, dass die Informationen der Datenübertragung durch eine Kodierung der Polarität und/oder der Amplitude und/oder die Richtung von (durch die Kommunikation ausgesendeten) Pulsen auf ein Kommunikationssignal moduliert wird. Hierzu können z. B. auch orthogonale Pulse eingesetzt werden.

Auch ist es optional denkbar, dass die Datenübertragung der Abstandsinformation von der Erfassungsvorrichtung über das Übertragungssystem an die Verarbeitungsvorrichtung derart zumindest teilweise verschlüsselt durchgeführt wird, dass eine Entschlüsselung zur Auswertung der zumindest teilweise verschlüsselten, insbesondere vollständig verschlüsselten, vorzugsweise über die Datenübertragung, übertragenen Abstandsinformation durch die Verarbeitungsvorrichtung nur anhand einer Schlüsselinformation erfolgen kann, wobei bevorzugt die Schlüsselinformation durch die Verarbeitungsvorrichtung und/oder einer Entschlüsselungsvorrichtung ausgewertet wird. Bspw. ist hierbei die Schlüsselinformation, insbesondere digital, für die Verarbeitungsvorrichtung lesbar in einer nicht-flüchtigen Datenspeichereinheit (des Fahrzeugs) gespeichert. Es kann vorgesehen sein, dass die Datenübertragung, d. h. die Übertragung der Abstandsinformation und/oder weiterer Informationen und/oder Daten, vollständig verschlüsselt oder nur teilweise verschlüsselt, z. B. nur durch die Verschlüsselung der Abstandsinformation(en), erfolgt. Bevorzugt kann es möglich sein, dass nur die sicherheitsrelevanten Daten der Datenübertragung verschlüsselt übertragen werden. Auch kann es möglich sein, dass die Daten (z. B. die Abstandsinformationen) der Datenübertragung zumindest teilweise auch schon vom ID-Geber verschlüsselt werden und/oder verschlüsselt an die Erfassungsvorrichtung übertragen werden. Dies ist insbesondere davon abhängig, ob die Abstandsinformation in der Erfassungsvorrichtung bestimmt und/oder generiert wird (Erfassungsvorrichtung führt die Verschlüsselung durch) oder bereits im ID-Geber bestimmt und/oder generiert wird (ID-Geber führt die Verschlüsselung durch). So kann es möglich sein, dass die Abstandsinformation durch den ID-Geber bestimmt wird und anschließend (z. B. verschlüsselt) an die Erfassungsvorrichtung übertragen wird. In diesem Fall kann die Erfassungsvorrichtung die Abstandsinformation bspw. entschlüsseln und/oder prüfen und/oder für die Datenübertragung an die Verarbeitungsvorrichtung neu (z. B. mit einer anderen Schlüsselinformation) verschlüsseln. Auch ist es denkbar, dass die Erfassungsvorrichtung keinerlei Schlüsselinformation umfasst, und somit nur das verschlüsselte Signal (z. B. die verschlüsselte Abstandsinformation) von dem ID-Geber an die Verarbeitungsvorrichtung weiterleitet. Alternativ ist es möglich, dass die Erfassungsvorrichtung selbst die Abstandsinformation bestimmt, z. B. anhand der Signale der Kommunikation mit dem ID-Geber, und entsprechend z. B. auch die Abstandsinformation verschlüsselt. Selbstverständlich ist auch eine Kombination dieser Möglichkeiten denkbar, um die Sicherheit bei dem Betrieb des Sicherheitssystems weiter zu erhöhen.

Bevorzugt erfolgt neben einer Verschlüsselung und/oder fälschungssicheren Datenübertragung eine weitere Kodierung der Daten und/oder Abstandsinformation. Es wird vorzugsweise unter der "Verschlüsselung" z. B. der Daten und/oder "fälschungssicheren" Übertragung insbesondere eine Sicherheitsfunktion zur Verhinderung einer bewussten Manipulation der Übertragung bzw. Daten verstanden. Damit erfolgt insbesondere eine Abgrenzung der "Verschlüsselung" und "Fälschungssicherheit" zu anderen Kodierungs- und/oder Kontroll- und/oder Fehlerkorrekturverfahren zur Verhinderung und/oder Erkennung einer fehlerhaften Übertragung (aufgrund von Übertragungsfehlern, wie z. B. Rauschen). Vorzugsweise erfolgt auch eine Abgrenzung zu Kodierungen, welche (z. B. ausschließlich) zur Ermöglichung der Datenübertragung eingesetzt werden (Zeichenkodierung, Multiplexing, Spreizcodes u.s.w.), insbesondere sofern diese nur zur Übertragung und nicht zum Schutz vor Manipulationen eingesetzt werden. Unter einer bewussten Manipulation wird dabei insbesondere die durch eine Person herbeigeführte unbefugte bewusste Veränderung der Datenübertragung verstanden.

Des Weiteren ist es denkbar, dass eine Schlüsselinformation zum Entschlüsseln auslesegeschützt in einer nicht-flüchtigen Datenspeichereinheit des Fahrzeuges gespeichert ist, wobei die nicht-flüchtige Datenspeichereinheit elektrisch mit der Verarbeitungsvorrichtung und/oder einer Entschlüsselungsvorrichtung verbunden ist. Die Schlüsselinformation kann hierfür bspw. derart auslesegeschützt werden, dass die nicht-flüchtige Datenspeichereinheit einen (vorwiegend) elektronischen Sicherheitsmechanismus aufweist, welcher elektronisch kryptografischen Methoden zur Speicherung und/oder Verschlüsselung der Schlüsselinformation umfasst. Bspw. kann die nicht-flüchtige Datenspeichereinheit einen integrierten Schaltkreis aufweisen, welcher Sicherheitsmechanismen bereitstellt. Auch ist es denkbar, dass die nicht-flüchtige Datenspeichereinheit mit einem entsprechenden Sicherheits-IC (integrierter Schaltkreis) mit derartigen Sicherheitsmechanismen verbunden ist. Dies ermöglicht eine Manipulation durch Auslesen der Schlüsselinformationen am Fahrzeug.

Des Weiteren kann vorgesehen sein, dass, insbesondere zeitlich, vor Schritt a) zumindest einer der nachfolgenden Schritte vorgesehen ist:
- Durchführen einer Abstandsermittlung durch eine Verarbeitungseinheit des Identifikationsgebers, wodurch die Abstandsinformation, insbesondere mit dem Abstand, bestimmt wird und/oder bestimmbar ist,
- Übertragen der Abstandsinformation, insbesondere mit dem Abstand, von dem Identifikationsgeber an die Erfassungsvorrichtung des Fahrzeuges, wobei die Übertragung der Abstandsinformation bevorzugt verschlüsselt erfolgt.

Die Übertragung kann bspw. über die Kommunikation zwischen dem ID-Geber und der Kommunikationsvorrichtung und/oder der Erfassungsvorrichtung erfolgen. Bevorzugt wird dabei für die Verschlüsselung der Abstandsinformation die gleiche oder eine andere Schlüsselinformation verwendet, als die, welche zur Verschlüsselung der Datenübertragung der Abstandsinformation von der Erfassungsvorrichtung an die Verarbeitungsvorrichtung genutzt wird. Somit ist es denkbar, dass eine erste Schlüsselinformation in dem ID-Geber gespeichert ist und eine zweite Schlüsselinformation, welche sich von der ersten Schlüsselinformation unterscheidet, in der Erfassungsvorrichtung gespeichert ist und/oder eine dritte Schlüsselinformation, welche sich von der ersten und/oder zweiten Schlüsselinformation unterscheidet, in der Verarbeitungsvorrichtung gespeichert ist. Auch eine Kombination oder konfigurierbare Umschaltung zwischen zwei oder mehreren der genannten Verfahren ist denkbar, um z. B. eine vielseitige Anpassung an verschiedene Sicherheitssysteme zu ermöglichen.

Ferner kann es im Rahmen der Erfindung vorgesehen sein, dass, bevorzugt zeitlich, vor Schritt a) der nachfolgende Schritt vorgesehen ist:
- Durchführen einer Abstandsermittlung durch die Erfassungsvorrichtung, bevorzugt durch eine Erfassungsauswerteeinheit der Erfassungsvorrichtung, wodurch die Abstandsinformation bestimmt wird.

Die Erfassungsauswerteeinheit kann dabei die gleichen Elektronikkomponenten aufweisen, wie sie z. B. für die Verarbeitungsvorrichtung und/oder eine Verschlüsselungsvorrichtung des Fahrzeugs genannt wurden. Insbesondere ist die Erfassungsauswerteeinheit dazu ausgeführt, arithmetische Operationen durchzuführen, welche der Bestimmung der Abstandsinformation dienen. Insbesondere umfasst die Erfassungsvorrichtung zur Bestimmung der Abstandsinformationen zumindest einen Analog-Digital-Wandler, um die vom Identifikationsgeber empfangenen Funksignale digitalisieren und/oder elektronisch weiter verarbeiten zu können.

Weiter ist im Rahmen der Erfindung denkbar, dass eine Übertragung der Abstandsinformation von dem Identifikationsgeber an die Erfassungsvorrichtung und/oder an die Verarbeitungsvorrichtung des Fahrzeuges derart verschlüsselt erfolgt, dass der Identifikationsgeber eine Verschlüsselung anhand einer, vorzugsweise öffentlichen, ersten Schlüsselinformation durchführt, und die Erfassungsvorrichtung und/oder die Verarbeitungsvorrichtung die Entschlüsselung anhand einer, vorzugsweise geheimen, zweiten Schlüsselinformation durchführt, welche sich von der ersten Schlüsselinformation unterscheidet. Hierzu kann die Erfassungsvorrichtung und/oder die Verarbeitungsvorrichtung bspw. eine Entschlüsselungsvorrichtung und/oder eine Verschlüsselungsvorrichtung aufweisen, welche z. B. solche Elektronikkomponenten aufweisen kann, wie sie auch in Bezug auf die Verarbeitungsvorrichtung beschrieben worden sind. Insbesondere ist es denkbar, dass die Verschlüsselung und/oder Entschlüsselung durch eine symmetrische und/oder asymmetrische Verschlüsselung erfolgt. Unter einer geheimen Schlüsselinformation wird vorzugsweise eine für die Entschlüsselung relevante Information verstanden, z. B. ein privater Schlüssel, welcher zur Gewährleistung der Sicherheit der Verschlüsselung nicht öffentlich bekannt sein darf. Bevorzugt ist die öffentliche Schlüsselinformation eine Information und/oder ein öffentlicher Schlüssel, welche eine Verschlüsselung von Daten derart ermöglicht, dass eine Entschlüsselung dieser verschlüsselten Daten ausschließlich durch die geheime Schlüsselinformation durchführbar ist. Derartige öffentliche und geheime (private) Schlüsselinformationen sind bspw. durch asymmetrische kryptografische Verfahren wie RSA bekannt, und ermöglichen einen sehr hohen Sicherheitsstandard bei der Datenübertragung.

Optional kann es vorgesehen sein, dass die Datenübertragung gemäß Schritt b) derart verschlüsselt erfolgt, dass die Erfassungsvorrichtung eine Verschlüsselung anhand einer, vorzugsweise öffentlichen, ersten Schlüsselinformation durchführt, und die Verarbeitungsvorrichtung die Entschlüsselung anhand einer, vorzugsweise geheimen, zweiten Schlüsselinformation durchführt, welche sich von der ersten Schlüsselinformation unterscheidet. Bevorzugt ist dabei die Entschlüsselung ausschließlich durch die geheime Schlüsselinformation möglich, d. h. nicht durch die öffentliche Schlüsselinformation. Somit kann bspw. eine Manipulation vermieden werden, indem die öffentliche Schlüsselinformation z. B. des ID-Gebers ausgelesen wird.

Es ist ferner denkbar, dass eine digitale Schlüsselinformation für die Verschlüsselung der Abstandsinformation vorgesehen ist und mindestens eine Schlüssellänge von 10 Bit bis 10000 Bit, vorzugsweise 512 Bit bis 4096 Bit, bevorzugt 1024 Bit bis 2048 Bit, aufweist, wobei besonders bevorzugt die Schlüsselinformation als kryptographischer Schlüssel für eine asymmetrische oder symmetrische Verschlüsselung zum Einsatz kommt. Dies ermöglicht eine weitere Erhöhung der Sicherheit bei der Datenübertragung.

Des Weiteren kann vorgesehen sein, dass eine Übertragung der Abstandsinformation, insbesondere durch die Datenübertragung und/oder von dem Identifikationsgeber an die Erfassungsvorrichtung und/oder an die Verarbeitungsvorrichtung, derart verschlüsselt erfolgt, dass eine Schlüsselinformation abwechselnd und/oder zeitlich und/oder zufällig und/oder auf Basis eines kryptographischen Algorithmus verändert wird. Bspw. kann zur abwechselnden Veränderung ein so genannter Rolling-Code eingesetzt werden. Bspw. umfasst der ID-Geber und/oder die Erfassungsvorrichtung und/oder die Verarbeitungsvorrichtung hierzu eine Liste mit verschiedenen Schlüsselinformationen, welche sich voneinander unterscheiden und/oder in einer vordefinierten Reihenfolge angeordnet sind. Auf diese Weise kann z. B. ein so genannter Replay-Angriff erschwert werden, welcher auf einer Aufzeichnung der Kommunikation basiert.

Außerdem ist es von Vorteil, wenn eine Abstandsermittlung durch eine Auswertung eines Kommunikationssignals zur Kommunikation zwischen dem Identifikationsgeber und dem Fahrzeug durchgeführt wird, wobei durch die Abstandsermittlung der Abstand und/oder die Abstandsinformation bestimmt wird. Bspw. kann es möglich sein, dass die Abstandsinformation bereits den bestimmten Abstand umfasst (insbesondere den Abstand zwischen dem Fahrzeug und dem ID-Geber) oder lediglich Informationen über den Abstand umfasst, d. h. bspw. Informationen wie die Signalstärke, welche zur Bestimmung des Abstands dienen. Bevorzugt wird zur Erfassung der Abstandsinformation durch die Erfassungsvorrichtung die Abstandsinformation anhand einer Laufzeitanalyse vom ID-Geber bestimmt und/oder anschließend über die Kommunikation und/oder ein Funksignal und/oder eine weitere Kommunikation an die Erfassungsvorrichtung übertragen. Insbesondere kann der Abstand durch die Abstandsinformation bestimmt werden, wobei die Abstandsinformation z. B. eine von mehreren Informationen liefert, welche zur Bestimmung des Abstands notwendig sind. Somit kann gewährleistet werden, dass sich der ID-Geber innerhalb eines maximalen Abstand zum Fahrzeug befinden muss, um die Sicherheitsfunktion zu aktivieren.

In einer weiteren Möglichkeit kann vorgesehen sein, dass eine Abstandsermittlung durch eine Laufzeitanalyse eines Kommunikationssignals, vorzugsweise eines Ultrabreitbandsignals, einer Kommunikation zwischen einer Kommunikationseinheit des Fahrzeuges und einer Sende-Empfangseinheit des Identifikationsgebers durchgeführt wird, wobei bevorzugt die Erfassungsvorrichtung die Kommunikationseinheit umfasst. Die Kommunikation ist dabei bevorzugt eine Funk-Kommunikation, und das Kommunikationssignal ist bevorzugt ein Funksignal, insbesondere zur Übertragung von Daten und/oder der Abstandsinformation. Weiter können die übertragenen Daten bspw. auch Authentifizierungsdaten umfassen, wobei z. B. die Abstandsinformation durch die Erfassungsvorrichtung durch eine Auswertung der Signalstärke des Kommunikationssignals erfolgt. Auch eine Kombination dieser Möglichkeiten ist denkbar, um z. B. die Zuverlässigkeit und/oder Genauigkeit der Abstandsermittlung zu erhöhen. Mit anderen Worten können mehrere Informationen zur Bestimmung des Abstands und/oder der Abstandsinformation herangezogen werden, wie z. B. die Signalstärke und/oder die Abstandsinformation und/oder die übertragenen Daten, welche zur Bestimmung des Abstands und/oder der Abstandsinformation kombiniert werden.

Ein weiterer Vorteil kann im Rahmen der Erfindung erzielt werden, wenn zumindest eine Kommunikation zwischen dem Identifikationsgeber und dem Fahrzeug über mindestens ein Kommunikationssignal als eine drahtlose Kommunikation durch zumindest eine der nachfolgenden Kommunikationstechnologien erfolgt:
- Bluetooth,
- Bluetooth Low Energy,
- Ultrabreitband.

Bevorzugt kann dabei die Abstandsinformation durch eine Auswertung, insbesondere der Signalstärke des Kommunikationssignals der Kommunikation, bestimmt werden. Dabei erfolgt die erste Kommunikation bevorzugt durch eine erste Kommunikationseinheit und die zweite Kommunikation bevorzugt durch eine zweite Kommunikationseinheit der Kommunikationsvorrichtung und/oder der Erfassungsvorrichtung. Bevorzugt ist dabei die Kommunikationsvorrichtung und/oder die Erfassungsvorrichtung mit einer Energiemanagementvorrichtung verbunden, um situationsabhängig einen Energiesparmodus der Kommunikation zu aktivieren. Dieser kann bspw. einen Umschaltvorgang umfassen, so dass bspw. die Kommunikation über Ultrabreitband abgeschaltet wird und/oder stattdessen eine andere Kommunikationsart (Kommunikationstechnologie) aktiviert wird, wie z. B. Bluetooth, Bluetooth Low Energy, LF, HF oder dergleichen.

Insbesondere wird im Rahmen der Erfindung unter Bluetooth auch Bluetooth Low Energy verstanden.

Des Weiteren kann vorgesehen sein, dass durch eine Kommunikationsvorrichtung des Fahrzeuges, insbesondere durch eine erste und/oder zweite Kommunikationseinheit der Kommunikationsvorrichtung, ein Kommunikationsfeld mit einer Sicherheitszone erzeugt wird. Insbesondere wird dabei nur dann eine weitere und/oder erste und/oder zweite Kommunikation mit dem ID-Geber durch eine weitere und/oder erste und/oder zweite Kommunikationseinheit zugelassen, wenn die Lokalisierung des ID-Gebers innerhalb der Sicherheitszone festgestellt wird. Somit kann bspw. eine Manipulation der Authentifizierung bei einem Empfang von Authentifizierungsdaten von einem ID-Geber außerhalb der Sicherheitszone verhindert werden.

Es ist ferner denkbar, dass eine erste Kommunikationseinheit zur Bluetooth- und/oder Ultrabreitband- und/oder HF-Kommunikation (HF, engl. high frequency) ausgeführt ist und/oder eine zweite Kommunikationseinheit zur LF- (engl., low frequency) oder HF-Kommunikation ausgeführt ist. Eine LF-Kommunikation erfolgt dabei bspw. zur Initialisierung des ID-Gebers, z. B. durch ein Wecksignal. Die Funkübertragung mittels LF erfolgt dabei bspw. in einem Frequenzbereich um 125 KHz. Bevorzugt wird die (LF-) Sicherheitszone (bzw. der Radius der Sicherheitszone) bei der Nutzung der LF-Kommunikation durch die maximale Sendeleistung definiert, da hierbei die maximal mögliche Reichweite (bei 125 KHz) bei ca. 2 m liegt. Entsprechend weist dann die erste und/oder zweite Sicherheitszone (als LF-Sicherheitszone) einen Radius von ca. 2 m auf. Weiter kann die Sicherheitszone in einfacher Weise durch Einstellung der maximalen Sendeleistung und/oder Empfangsleistung (z. B. der Erfassungsvorrichtung und/oder Kommunikationsvorrichtung) definiert werden, wodurch z. B. eine deutliche Kostenersparnis möglich ist.

Auch kann es vorgesehen sein, dass, vorzugsweise durch die, insbesondere Begrenzung der, maximal zulässige Sendeleistung, der Radius der ersten und/oder zweiten Sicherheitszone in einem Bereich von 1m bis 100 m, bevorzugt 1 m bis 10 m, vorzugsweise in einem Bereich von 2 m bis 6 m und/oder 4 m bis 5 m liegt. Weiter kann es vorgesehen sein, dass der Radius der ersten und/oder zweiten Sicherheitszone dadurch definiert und/oder begrenzt wird, dass eine Sichtverbindung zwischen der Kommunikationsvorrichtung und/oder Erfassungsvorrichtung und dem ID-Geber vorhanden sein muss. Zudem kann es möglich sein, dass der Radius der ersten Sicherheitszone durch eine Parametrisierung festgelegt wird, und somit bspw. als ein digital gespeicherter Wert vorliegt. In diesem Fall kann z. B. über eine Auswertung der UWB-Kommunikation und/oder der Abstandsinformation der tatsächliche Abstand zwischen dem ID-Geber und dem Fahrzeug festgelegt werden und mit dem vorgespeicherten Wert verglichen werden, um zu bestimmen, ob sich der ID-Geber innerhalb der Sicherheitszone bzw. der ersten Sicherheitszone befindet. Auch kann es möglich sein, dass daneben eine zweite Sicherheitszone definiert ist, wobei der Radius der zweiten Sicherheitszone z. B. durch die maximal zulässige Sendeleistung der (zweiten) Kommunikation bestimmt wird.

Weiter kann es vorgesehen sein, dass eine erste oder zweite Kommunikationseinheit einer Kommunikationsvorrichtung des Fahrzeugs und/oder eine erste oder zweite Sende-Empfangseinheit einer Sende-Empfangsvorrichtung des Identifikationsgebers aktiviert wird, wenn ein Eintritt des Identifikationsgebers in die, insbesondere eine erste oder zweite, Sicherheitszone festgestellt wird. Dies ermöglicht es z. B., dass eine (erste oder zweite) Sende-Empfangseinheit zur UWB-Kommunikation erst dann aktiviert werden muss, wenn bereits der Eintritt in die erste oder zweite Sicherheitszone festgestellt wurde, um bspw. den Energieverbrauch zu senken. Die Feststellung, dass ein Eintritt in die erste oder zweite Sicherheitszone erfolgt ist, kann bspw. dadurch erfolgen, dass eine Initiierung der ersten oder zweiten Kommunikation festgestellt wird und/oder dass durch die Lokalisierung ein Abstand des Identifikationsgebers innerhalb der ersten oder zweiten Sicherheitszone festgestellt wird.

Des Weiteren kann es vorgesehen sein, dass eine erste oder zweite Kommunikationseinheit der Kommunikationsvorrichtung des Fahrzeugs und/oder eine erste oder zweite Sende-Empfangseinheit einer Sende-Empfangsvorrichtung des Identifikationsgebers deaktiviert wird, wenn anhand der Lokalisierung festgestellt wird, dass sich der Identifikationsgeber außerhalb einer insbesondere ersten oder zweiten Sicherheitszone befindet. Hierdurch wird der Vorteil erzielt, dass die Kommunikation abgeschaltet werden kann, wenn sie nicht benötigt wird, und damit der Energieverbrauch gesenkt wird.

Optional kann es vorgesehen sein, dass die Datenübertragung der Abstandsinformation über zumindest zwei Übertragungsstationen des Übertragungssystems erfolgt, wobei durch jede Übertragungsstation eine Verschlüsselung und/oder Entschlüsselung anhand einer jeweiligen Schlüsselinformation erfolgt. Die Übertragungsstationen dienen dabei insbesondere zur fahrzeuginternen Datenübertragung und/oder sind bspw. als Bussystem-Teilnehmer ausgebildet. Entsprechend kann es vorgesehen sein, dass die Datenübertragung über einen fahrzeuginternen (Daten-) Bus erfolgt, um eine zuverlässige und schnelle Kommunikation zu ermöglichen.

Ferner ist es denkbar, dass die Lokalisierung des Identifikationsgebers anhand einer ersten Kommunikation einer ersten Kommunikationseinheit, insbesondere nur im Außenraum des Fahrzeugs, redundant und/oder unterstützend zu einer Lokalisierung des Identifikationsgebers anhand einer zweiten Kommunikation durch eine zweite Kommunikationseinheit erfolgt. Der Außenraum des Fahrzeugs ist dabei der Außenbereich des Fahrzeugs und/oder der Bereich, in welchem ausschließlich eine Funk-Kommunikation (der ersten und/oder zweiten Kommunikation) erfolgt. Insbesondere kann es vorgesehen sein, dass die erste Kommunikation als eine UWB-Kommunikation nur im Außenraum des Fahrzeugs eingesetzt wird, und bspw. nicht zur Lokalisierung des ID-Gebers innerhalb des Fahrzeugs dient. Außerhalb des Fahrzeugs kann die erste Kommunikation derart unterstützend zur zweiten Kommunikation erfolgen, dass hierdurch bspw. die Genauigkeit der Lokalisierung erhöht wird, insbesondere dadurch, dass unterschiedliche Lokalisierungsarten und Kommunikationsarten für die erste und zweite Kommunikation eingesetzt werden.

Ebenfalls Gegenstand der Erfindung ist ein mobiler Identifikationsgeber (ID-Geber) für eine Aktivierung mindestens einer Sicherheitsfunktion eines Sicherheitssystems eines Fahrzeuges und/oder zur Authentifizierung an einem Sicherheitssystem des Fahrzeuges, wobei eine drahtlose Kommunikation zwischen dem Identifikationsgeber und einer Kommunikationsvorrichtung des Fahrzeuges durchführbar ist. Hierbei ist vorgesehen, dass eine Verschlüsselungseinheit zur verschlüsselten Übertragung einer Abstandsinformation vorgesehen ist. Damit bringt der erfindungsgemäße mobile Identifikationsgeber die gleichen Vorteile mit sich, wie sie ausführlich mit Bezug auf ein erfindungsgemäßes Verfahren beschrieben worden sind. Zudem kann der mobile Identifikationsgeber geeignet sein, gemäß einem erfindungsgemäßen Verfahren betreibbar zu sein. Es kann vorgesehen sein, dass die Verschlüsselungseinheit eine Entschlüsselungseinheit umfasst und/oder neben der Verschlüsselungseinheit eine Entschlüsselungseinheit des mobilen Identifikationsgebers vorgesehen ist. Weiter kann es auch vorgesehen sein, dass eine verschlüsselte Übertragung einer oder mehrerer Authentifizierungsinformationen (wie z. B. Codes) an das Sicherheitssystem durchführbar ist.

Es kann optional möglich sein, dass eine erste Sende-Empfangseinheit und eine zweite Sende-Empfangseinheit vorgesehen ist, wobei insbesondere die erste Sende-Empfangseinheit eine Bluetooth- und/oder Bluetooth Low Energy- und/oder Ultrabreitband-Schnittstelle umfasst, und bevorzugt die zweite Sende-Empfangseinheit eine LF- und/oder HF-Schnittstelle umfasst. Damit ist eine zuverlässige Kommunikation mit den entsprechenden Kommunikationseinheiten des Fahrzeugs möglich. Diese Kommunikationseinheiten sind bspw. eine erste Kommunikationseinheit zur Bluetooth- und/oder Bluetooth Low Energy- und/oder Ultrabreitband-Kommunikation und/oder eine zweite Kommunikationseinheit zur LF- und/oder HF-Kommunikation.

Ebenfalls Gegenstand der Erfindung ist ein Sicherheitssystem für ein Fahrzeug, aufweisend:
- wenigstens eine Erfassungsvorrichtung des Fahrzeuges zur Erfassung zumindest einer Abstandsinformation über einen Abstand eines mobilen Identifikationsgebers, insbesondere eines erfindungsgemäßen mobilen Identifikationsgebers, zu dem Fahrzeug,
- wenigstens eine, insbesondere zentrale, Verarbeitungsvorrichtung des Fahrzeuges zur Auswertung der Abstandsinformation, wodurch insbesondere eine Lokalisierung des Identifikationsgebers in Abhängigkeit von der Abstandsinformation durchführbar ist,
- ein Übertragungssystem des Fahrzeuges zur Übertragung der Abstandsinformation durch eine Datenübertragung von der Erfassungsvorrichtung an die, insbesondere zentrale, Verarbeitungsvorrichtung.

Hierbei ist vorgesehen, dass die Datenübertragung der Abstandsinformation fälschungssicher und/oder abhörsicher und/oder verschlüsselt durchführbar ist. Damit bringt das erfindungsgemäße Sicherheitssystem die gleichen Vorteile mit sich, wie sie ausführlich mit Bezug auf ein erfindungsgemäßes Verfahren und/oder auf einen erfindungsgemäßen mobilen ID-Geber beschrieben worden sind. Ferner kann das Sicherheitssystem geeignet sein, gemäß einem erfindungsgemäßen Verfahren betreibbar zu sein.

Ferner ist es optional vorgesehen, dass die Erfassungsvorrichtung eine Kommunikationsvorrichtung zur Kommunikation mit dem Identifikationsgeber mit zumindest zwei Kommunikationseinheiten am Fahrzeug umfasst. Auch ist es denkbar, dass weitere Kommunikationseinheiten, wie z. B. eine dritte und/oder vierte Kommunikationseinheit, am Fahrzeug vorgesehen sind. Bevorzugt ermöglichen dabei die Kommunikationseinheiten eine Kommunikation mit jeweils unterschiedlichen Kommunikationsarten. So ist bspw. durch die erste Kommunikationseinheit eine erste Kommunikation möglich und durch die zweite Kommunikationseinheit eine zweite Kommunikation möglich, wobei sich die erste Kommunikation von der zweiten Kommunikation in Bezug auf die Kommunikationsart unterscheidet. Dies ermöglicht bspw. die Erhöhung der Abhörsicherheit und/oder die Erhöhung der Ausfallsicherheit.

Vorteilhafterweise kann bei der Erfindung vorgesehen sein, dass eine zweite Kommunikationseinheit des Fahrzeuges eine Bluetooth- und/oder LF- und/oder HF-Kommunikationsschnittstelle umfasst, welche sich zumindest teilweise von den Kommunikationsschnittstellen einer ersten Kommunikationseinheit des Fahrzeuges unterscheiden. Insbesondere umfasst die erste Kommunikationseinheit des Fahrzeugs mindestens eine der nachfolgenden Kommunikationsschnittstellen: Bluetooth, Bluetooth Low Energy, Ultrabreitband, oder dergleichen. Vorzugsweise ist dabei die Kommunikation, insbesondere die erste und/oder zweite Kommunikation, eine bidirektionale Kommunikation, insbesondere zwischen dem ID-Geber und dem Fahrzeug. Auch ist es denkbar, dass die Kommunikation, insbesondere die erste und/oder zweite Kommunikation und/oder eine weitere Kommunikation, zwischen verschiedenen ID-Gebern erfolgt, z. B. zum Datenaustausch und/oder zum Austausch einer Schlüsselinformation, insbesondere einer öffentlichen Schlüsselinformation. Dies hat den Vorteil, dass z. B. ein neuer ID-Geber an einen bestehenden ID-Geber angelernt werden kann. Bevorzugt dient dabei die (erste und/oder zweite) Kommunikationseinheit als Kommunikationsschnittstelle zum ID-Geber, oder auch als Gateway und/oder zur Datenübertragung von Fahrzeuginformationen an den ID-Geber und/oder zur Realisierung von Komfortfunktionen, wie z. B. das Auffinden des ID-Gebers über RSSI-Werte (RSSI, engl. Received Signal Strength Indicator) der BTLE-(Bluetooth Low Energy) Advertising/Connected Telegramme.

Gemäß einem weiteren Vorteil kann vorgesehen sein, dass das Übertragungssystem mindestens ein Bussystem umfasst, vorzugsweise ein LIN- (Local Interconnect Network) und/oder CAN- (Control Area Network) und/oder SPI (Serial Peripheral Interface) und/oder I2C-Bussystem (engl. Inter-Intergrated-Circuit-Bussystem), und bevorzugt eine Verschlüsslungsvorrichtung umfasst oder mit der Verschlüsslungsvorrichtung elektrisch verbunden ist. Bevorzugt betrifft dabei das I2C-Bussystem die Kommunikation zwischen einem abstandsmessenden Bauteil des Fahrzeuges, wie der Erfassungsvorrichtung und/oder einem Kommunikationsteil (z. B. der Erfassungsvorrichtung), und einem Mikrocontroller (z. B. der Erfassungsvorrichtung). Insbesondere erfolgt eine Verschlüsselung der Datenübertragung des Bussystems und/oder zwischen dem abstandsmessenden Bauteil und der Verarbeitungsvorrichtung. Auch ist es denkbar, dass eine Kombination der genannten Bus-Systeme eingesetzt wird.

In einer weiteren Möglichkeit kann vorgesehen sein, dass die Erfassungsvorrichtung mindestens ein Kommunikationsteil, insbesondere eine Antenne und/oder eine Satellitenkomponente, zum Senden und/oder zum Empfangen elektromagnetischer Wellen eines Kommunikationssignals umfassen, wobei besonders bevorzugt die Abstandsinformation verschlüsselt von jedem Kommunikationsteil über das Übertragungssystem an die Verarbeitungsvorrichtung übertragbar ist. Bevorzugt sind dabei mindestens zwei oder mindestens drei oder mindestens vier und/oder mindestens fünf Kommunikationsteile am Fahrzeug, z. B. teilweise auf einem Dach des Fahrzeugs, angeordnet. Es ist dabei denkbar, dass die Verschlüsselung bereits innerhalb des Kommunikationsteils oder erst in einer Erfassungsauswerteeinheit der Erfassungsvorrichtung erfolgt. Auch kann es vorgesehen sein, dass jedes der Kommunikationsteile jeweils eine Erfassungsauswerteeinheit aufweist, welche z. B. zur Verschlüsselung und/oder Entschlüsselung verwendet wird. Entsprechend kann es vorgesehen sein, dass jedes der Kommunikationsteile eine z. B. öffentliche Schlüsselinformation aufweist, um eine zuverlässige Verschlüsselung zu gewährleisten.

Des Weiteren ist es denkbar, dass mindestens ein Kommunikationsteil am Dach des Fahrzeuges angeordnet ist, wobei das Kommunikationsteil mit einer Kommunikationsvorrichtung des Fahrzeuges elektrisch verbunden ist. Alternativ oder zusätzlich ist es denkbar, dass zumindest ein weiteres Kommunikationsteil, z. B. am Heck des Fahrzeugs, angeordnet ist und/oder im Fahrzeuginneren angeordnet ist. Weiter kann es möglich sein, dass durch eine Sende-Empfangsvorrichtung des Identifikationsgebers eine Bestimmung einer Abstandsinformation über den Abstand des Identifikationsgebers zum Fahrzeug durch eine Auswertung der Kommunikation durchführbar ist, und die Abstandsinformation an das Sicherheitssystem übertragbar ist, vorzugsweise an das mindestens eine Kommunikationsteil. Dies ermöglicht eine zuverlässige und sichere Bestimmung des Abstands.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht eines Fahrzeugs,
- Figur 2 - 4: schematische Ansichten auf ein Fahrzeug in einer Draufsicht,
- Figur 5 - 7: schematische Darstellungen eines erfindungsgemäßen Sicherheitssystem,
- Figur 8 + 9: weitere schematische Darstellungen eines erfindungsgemäßen Sicherheitssystems,
- Figur 10: eine weitere schematische Darstellung von Teilen eines erfindungsgemäßen Sicherheitssystems,
- Figur 11: eine schematische Draufsicht auf ein Fahrzeug mit einem erfindungsgemäßen Sicherheitssystem und
- Figur 12: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

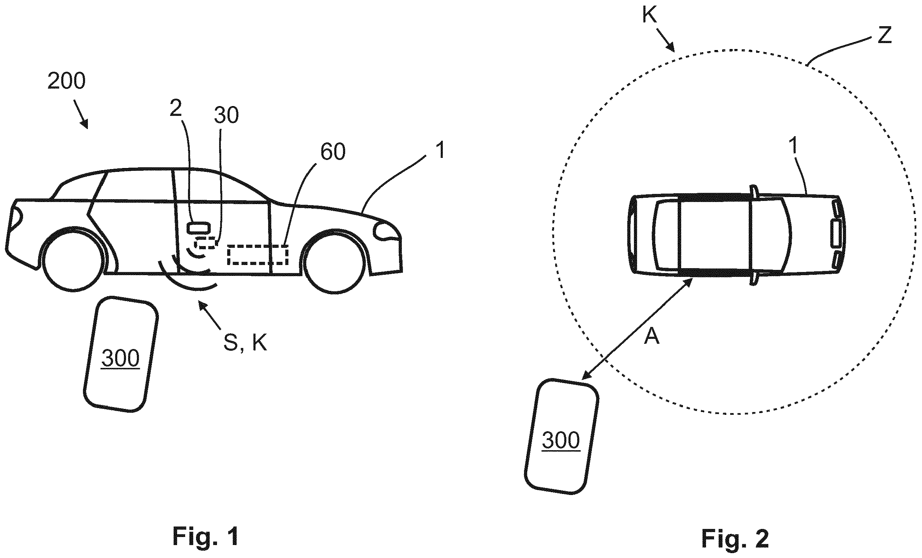

In Figur 1 ist schematisch ein Fahrzeug 1 in einer Seitenansicht gezeigt. Dabei umfasst das Fahrzeug 1 zumindest Teile eines erfindungsgemäßen Sicherheitssystems 200. So ist eine Kommunikationseinheit 30 sowie eine Verarbeitungsvorrichtung 60 am und/oder im Fahrzeug 1 vorgesehen. Optional ist zudem ein Annäherungssensor 2 zur Erfassung einer Annäherung eines Bedieners des Fahrzeuges 1 im Bereich eines Türgriffs des Fahrzeugs 1 angeordnet. Die Kommunikationseinheit 30 dient dabei zur Kommunikation mit einem mobilen Identifikationsgeber 300. Hierzu wird durch die Kommunikationseinheit 30 ein Kommunikationsfeld K erzeugt, wobei über Funkwellen des Kommunikationsfeldes K Informationen drahtlos übermittelt werden können. Zur Kommunikation mit dem mobilen Identifikationsgeber 300 werden dabei bspw. Kommunikationssignale S von der Kommunikationseinheit 30 empfangen und/oder gesendet, vorzugsweise über das Kommunikationsfeld K. Insbesondere dient das Kommunikationsfeld K (als ein Ultrabreitband-Kommunikationsfeld K) zur Übertragung von Ultrabreitband-Kommunikationssignalen S, wobei in diesem Fall das Kommunikationssignal S Funkwellen (des Kommunikationsfeldes K) nutzt, welche in einem besonders breiten Frequenzspektrum liegen. Bevorzugt umfassen die Ultrabreitband-Kommunikationssignale S somit ein besonders breites Frequenzspektrum. Für das Kommunikationsfeld K und/oder für das Kommunikationssignal S wird vorzugsweise ein Frequenzbereich mit einer Bandbreite von mindestens 500 MHz genutzt. Entsprechend kann das Kommunikationssignal S als breitbandiges Kommunikationssignal S bezeichnet werden.

Es kann mindestens eine Sicherheitszone Z um das Fahrzeug vorgesehen sein, wobei die Ausdehnung der Sicherheitszone Z insbesondere in Abhängigkeit von dem Kommunikationsfeld K und/oder einer Kommunikation des Fahrzeuges 1 definiert wird. Dies ist in Figur 2 schematisch dargestellt, wobei die Kreisform des Kommunikationsfeldes K und/oder der Sicherheitszone Z lediglich zur Veranschaulichung dient. In der Realität kann dabei die Reichweite und/oder die Ausdehnung der Sicherheitszone Z auch abhängig von einer Umgebung des Fahrzeugs 1 unregelmäßig verlaufen.

Die Sicherheitszone Z und/oder verschiedene Sicherheitszonen Z des Fahrzeuges 1 lassen sich jeweils in unterschiedlicher Weise bestimmen bzw. definieren. So wird die Reichweite der Kommunikation über das Kommunikationssignal S insbesondere durch die Ausdehnung des Kommunikationsfeldes K bestimmt. In Abhängigkeit von dieser physikalischen Grenze der Reichweite kann die Sicherheitszone Z gemäß einer ersten Möglichkeit definiert werden. Hierbei kann eine Abstandsermittlung genutzt werden, um eine Bestimmung eines Abstands A zwischen dem Identifikationsgeber 300 und dem Fahrzeug 1 durchzuführen. Wenn die Sicherheitszone Z durch die maximale Reichweite des Kommunikationsfeldes K bestimmt wird, kann zur Abstandsermittlung z. B. bei einer ausbleibenden Kommunikation davon ausgegangen werden, dass sich der Identifikationsgeber 300 außerhalb der Sicherheitszone Z befindet. In diesem Fall wird die Abstandsermittlung anhand der maximalen Kommunikationsreichweite durchgeführt. Alternativ oder zusätzlich kann es gemäß einer weiteren Möglichkeit vorgesehen sein, dass die Sicherheitszone Z als ein definierter Maximalabstand zum Fahrzeug 1 festgelegt ist, welcher bspw. innerhalb der maximalen Kommunikationsreichweite liegt. Zur Abstandsermittlung wird dann aktiv die Kommunikation durchgeführt und empfangene Signale ausgewertet. Hierfür muss die Abstandsermittlung Abstandsinformationen über einen konkreten Abstand A des Identifikationsgebers 300 zum Fahrzeug 1 bestimmen. Dies kann bspw. durch eine Laufzeitanalyse des Kommunikationssignals S erfolgen. Die Auswertung des Kommunikationssignals S zur Abstandsermittlung entspricht dabei insbesondere einer Auswertung der Kommunikation zwischen dem Fahrzeug 1 und dem Identifikationsgeber 300 und/oder einer Auswertung des Kommunikationsfeldes K.

Die Abstandsermittlung und/oder eine Auswertung der dadurch gewonnenen Abstandsinformation durch eine Verarbeitungsvorrichtung 60 des Fahrzeugs 1 ermöglicht eine genaue Lokalisierung des Identifikationsgebers 300 relativ zu der Sicherheitszone Z. Die Abstandsermittlung wird bspw. dann initiiert, wenn durch einen Annäherungssensor 2 des Fahrzeugs 1 eine Annäherung des Identifikationsgebers 300 detektiert wird. Alternativ oder zusätzlich kann die Abstandsermittlung auch dann initiiert werden, sobald eine Kommunikation des Fahrzeuges 1 mit dem Identifikationsgeber 300 möglich ist und/oder eine Verbindung zur Kommunikation aufgebaut wurde. Die Abstandsermittlung kann weiter auch dadurch initiiert werden, dass das Eintreten des Identifikationsgebers 300 in eine bestimmte Sicherheitszone Z überwacht wird, und beim bzw. nach dem Eintreten die Initiierung der Abstandsermittlung erfolgt.

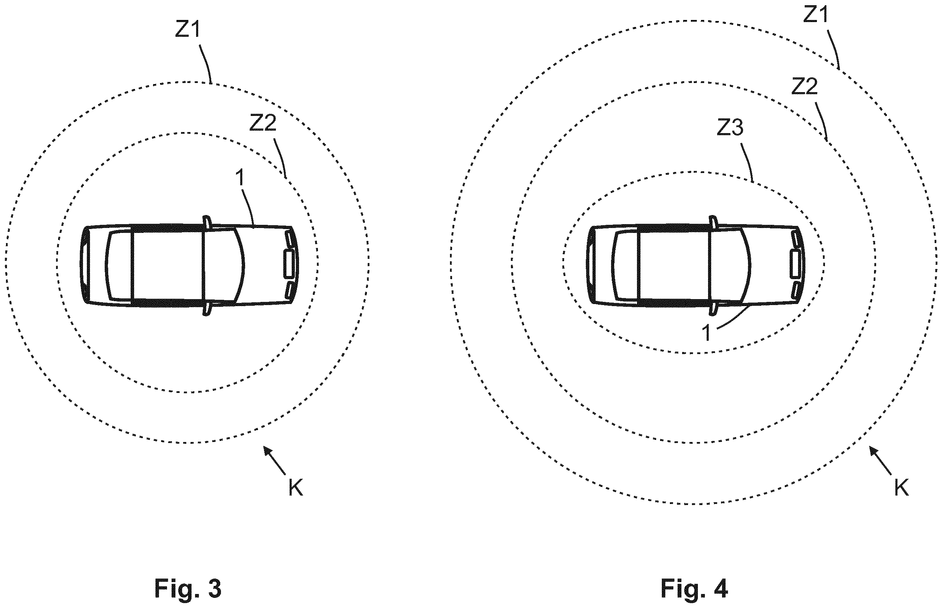

In den Figuren 3 und 4 ist schematisch dargestellt, dass auch mehrere Sicherheitszonen Z vorgesehen sein können. Bspw. können in unterschiedlichen Abständen vom Fahrzeug 1 eine erste Sicherheitszone Z1 und eine zweite Sicherheitszone Z2 sowie ggf. eine dritte Sicherheitszone Z3 und/oder weitere Sicherheitszonen Z vorgesehen sein. Dabei ist es denkbar, dass die dritte Sicherheitszone Z3 mit dem geringsten Abstand zum Fahrzeug 1 eine Komfortzone Z3 bildet, wobei eine Lokalisierung des Identifikationsgebers 300 innerhalb der Komfortzone Z3 (insbesondere lediglich) die Aktivierung von Komfortfunktionen bewirkt. Eine solche Komfortfunktion ist bspw. eine Aktivierung einer Vorfeldbeleuchtung des Fahrzeuges 1, welche bevorzugt beim Eintreten des Identifikationsgebers 300 in die Komfortzone Z3 erfolgt. Eine weitere Komfortfunktion ist bspw. die Aktivierung einer Fahrzeugbeleuchtung. Die erste Sicherheitszone Z1 erstreckt sich insbesondere in einem größeren Abstand vom Fahrzeug 1 als die zweite Sicherheitszone Z2. Der Identifikationsgeber 300 wird bspw. dann in der ersten Sicherheitszone Z1 lokalisiert, wenn eine zweite Kommunikation durch eine zweite Kommunikationseinheit 32, bspw. eine LF-Kommunikation zwischen dem Fahrzeug 1 und dem Identifikationsgeber 300, initiiert wird. Hierbei und/oder in Abhängigkeit von einer weiteren Lokalisierung, zum Beispiel anhand der zweiten Kommunikation, und/oder bei einer erfolgreichen Voridentifizierung des Sicherheitssystems 200 mit dem Identifikationsgeber 300 kann eine erste Kommunikation einer ersten Kommunikationseinheit 31 mit dem Identifikationsgeber 300, bevorzugt über Ultrabreitband, initiiert werden. Anhand dieser ersten Kommunikation kann dann erneut eine Abstandsermittlung durchgeführt werden, bspw. über eine Auswertung des Kommunikationssignals S der ersten Kommunikation, d. h. eines ersten Kommunikationssignals S1. Diese erneute Abstandsermittlung kann vorzugsweise zyklisch wiederholt werden. Wird nun durch diese erneute Abstandsermittlung ein Abstand A des Identifikationsgebers 300 vom Fahrzeug 1 festgestellt, welcher gleich und/oder geringer als der Abstand der zweiten Sicherheitszone Z2 vom Fahrzeug 1 ist, so erfolgt eine Lokalisierung des Identifikationsgebers 300 innerhalb der zweiten Sicherheitszone Z2. Bei einer erfolgreichen Lokalisierung des Identifikationsgebers 300 innerhalb der zweiten Sicherheitszone Z2 kann bspw. ein Authentifizierungsvorgang durchgeführt werden. Es kann dann wiederrum eine erneute Abstandsermittlung durchgeführt werden. Wird durch diese Abstandsermittlung ein Abstand A des Identifikationsgebers 300 vom Fahrzeug 1 festgestellt, welcher gleich und/oder geringer als der Abstand der dritten Sicherheitszone Z3 vom Fahrzeug 1 ist, so erfolgt eine Lokalisierung des Identifikationsgebers 300 innerhalb der dritten Sicherheitszone Z3. Bei einer erfolgreichen Lokalisierung des Identifikationsgebers 300 innerhalb der dritten Sicherheitszone Z3 kann bspw. ein erneuter Authentifizierungsvorgang durchgeführt werden und/oder eine Komfortfunktion aktiviert werden und/oder ein Zugangssystem des Fahrzeuges 1 angesteuert werden und/oder eine Tür und/oder ein Schloss des Fahrzeuges 1 geöffnet werden.

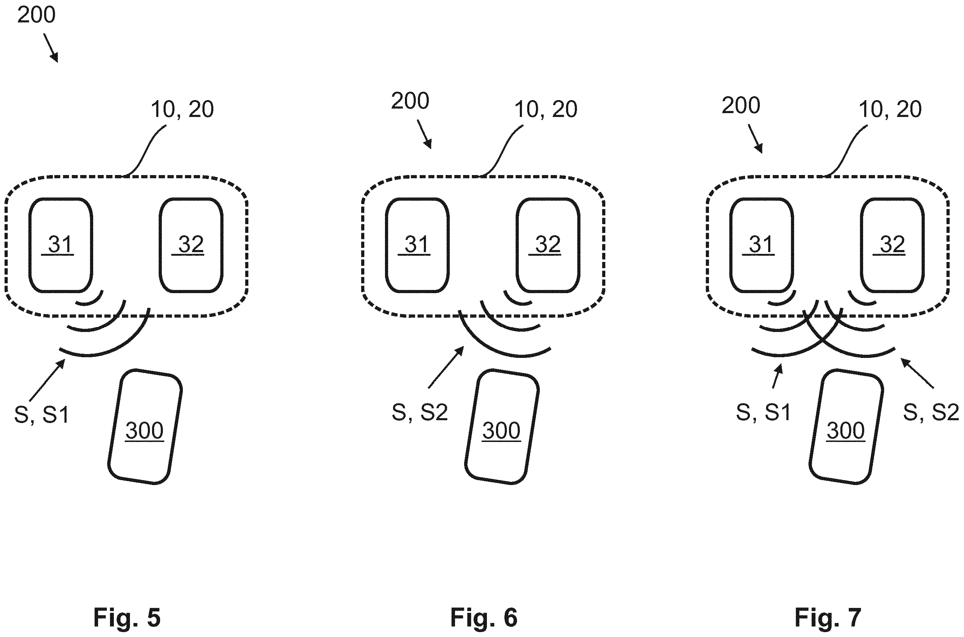

In den Figuren 5 bis 7 ist dieser Vorgang, insbesondere die erste und zweite Kommunikation, näher erläutert. Zur Durchführung der Kommunikation umfasst dabei das Sicherheitssystem 200 mindestens eine Erfassungsvorrichtung 10 und/oder mindestens eine Kommunikationsvorrichtung 20. Die Kommunikationsvorrichtung 20 kann dabei bspw. zumindest Teil der Erfassungsvorrichtung 10 des Fahrzeugs 1 sein. So können die Kommunikationsvorrichtung 20 und/oder die Erfassungsvorrichtung 10 zum Beispiel elektrisch miteinander verbunden sein und/oder als eine (gemeinsame) insbesondere elektrische Komponente ausgebildet sein. Auch ist es denkbar, dass die Kommunikationsvorrichtung 20 die Signale der Kommunikation empfängt, ggf. auswertet und insbesondere eine Abstandsermittlung durchführt und/oder die Abstandsinformation erfasst. Somit kann die Kommunikationsvorrichtung 20 auch die Erfassungsvorrichtung 10 bilden (bzw. dieser entsprechen) und/oder umgekehrt. Die Kommunikationsvorrichtung 20 und/oder die Erfassungsvorrichtung 10 umfasst zumindest eine Kommunikationseinheit 30, vorzugsweise eine erste Kommunikationseinheit 31 und eine zweite Kommunikationseinheit 32. Die erste Kommunikationseinheit 31 dient dabei einer ersten Kommunikation mit dem Identifikationsgeber 300 und die zweite Kommunikationseinheit 32 dient einer zweiten Kommunikation mit dem Identifikationsgeber 300.

Für die erste Kommunikation wird ein erstes Kommunikationssignal S1 und für die zweite Kommunikation wird ein zweites Kommunikationssignal S2 genutzt. Gemäß Figur 5 wird bspw. die erste Kommunikation über das erste Kommunikationssignal S1 zur Abstandsermittlung durchgeführt. Gemäß Figur 6 kann weiter die zweite Kommunikation über das zweite Kommunikationssignal S2 genutzt werden, um z. B. ein Wecksignal an den Identifikationsgeber 300 zu übertragen und/oder ebenfalls eine Abstandsermittlung durchzuführen. Auch kann die Aussendung des Wecksignals und die anschließende Überwachung auf ein Antwortsignal als Abstandsermittlung aufgefasst werden (in Bezug auf die maximale Kommunikationsreichweite, welche als Indikator für ein Eintreten in eine Sicherheitszone Z und/oder für den erforderlichen Abstand A genutzt wird). Gemäß Figur 7 wird gleichzeitig eine erste und zweite Kommunikation genutzt. So kann bspw. über die zweite Kommunikation, d. h. über das zweite Kommunikationssignal S2, die Abstandsermittlung durchgeführt werden, wobei das Ergebnis der Abstandsermittlung (d. h. die Abstandsinformation) anhand einer weiteren Abstandsermittlung durch die erste Kommunikation mit dem ersten Kommunikationssignal S1 plausibilisiert wird. Auch ist es denkbar, dass eine Authentifizierung über die erste und/oder zweite Kommunikation durchgeführt wird. Weiter kann es vorgesehen sein, dass die erste Kommunikation nur dann genutzt wird, wenn beispielsweise die zweite Kommunikation gestört ist.

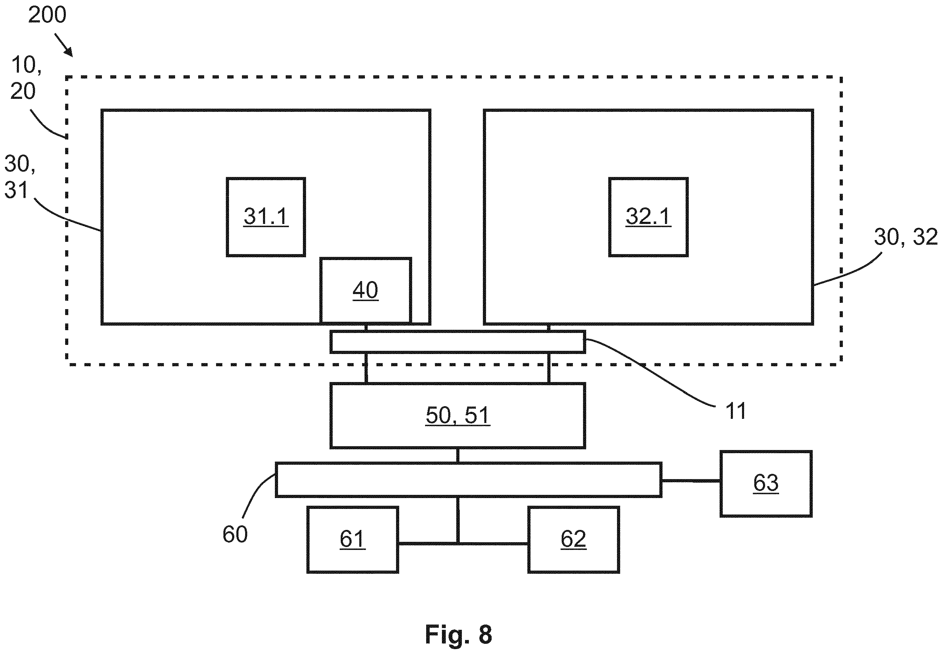

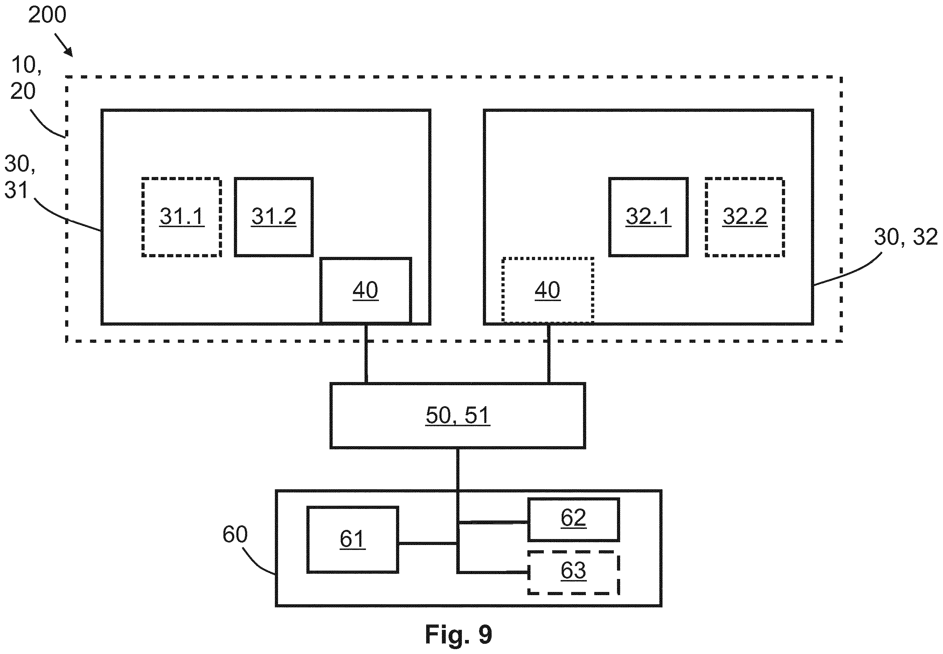

In Figur 8 ist ein schematischer Aufbau einer Erfassungsvorrichtung 10 und/oder einer Kommunikationsvorrichtung 20 eines erfindungsgemäßen Sicherheitssystems 200 dargestellt. Die Erfassungsvorrichtung 10 und/oder die Kommunikationsvorrichtung 20 umfasst dabei zumindest eine Kommunikationseinheit 30, insbesondere eine erste Kommunikationseinheit 31 und eine zweite Kommunikationseinheit 32. Die erste Kommunikationseinheit 31 umfasst mindestens eine erste Kommunikationsschnittstelle 31.1, insbesondere eine Ultrabreitband-Schnittstelle und/oder eine Bluetooth-Schnittstelle. Die zweite Kommunikationseinheit 32 umfasst mindestens eine zweite Kommunikationsschnittstelle 32.1, vorzugsweise eine LF-Schnittstelle und/oder eine HF-Schnittstelle. In Figur 9 ist gezeigt, dass optional die erste Kommunikationseinheit 31 mindestens eine weitere erste Kommunikationsschnittstelle 31.2, vorzugsweise eine Bluetooth-Schnittstelle, aufweisen kann. Ebenso kann die zweite Kommunikationseinheit 32 noch eine weitere zweite Kommunikationsschnittstelle 32.2, vorzugsweise eine HF-Schnittstelle und/oder Bluetooth-Schnittstelle, umfassen. Die Kommunikationsschnittstellen dienen dabei zur Durchführung der ersten und/oder zweiten Kommunikation über die entsprechende Kommunikationstechnologie. Weiter können die Kommunikationsschnittstellen auch jeweils mit entsprechenden Kommunikationsteilen 35, wie Antennen, elektrisch verbunden sein. Somit ist die Kommunikationsvorrichtung 20 in der Lage, über eine oder mehrere Kommunikationstechnologien eine Kommunikation mit dem Identifikationsgeber 300 durchzuführen. Insbesondere kann die Kommunikationsvorrichtung 20 selbstverständlich auch nur eine einzige (zum Beispiel erste) Kommunikationseinheit 30, 31 und/oder nur eine einzige (zum Beispiel erste) Kommunikationsschnittstelle aufweisen, sodass nur eine einzige (zum Beispiel erste) Kommunikation über eine einzige Kommunikationstechnologie mit dem Identifikationsgeber 300 möglich ist, zum Beispiel über Ultrabreitband. Die Informationen der so über die Kommunikationsteile 35 von der Kommunikationsvorrichtung 20 empfangenen Kommunikationssignale S werden anschließend über ein Übertragungssystem 50 des Fahrzeugs 1 an eine Verarbeitungsvorrichtung 60 des Fahrzeugs 1 übertragen. Die Informationen, wie eine Abstandsinformation, können dabei bspw. auch verschlüsselt übertragen werden. Optional umfasst die Kommunikationsvorrichtung 20 und/oder jede (oder nur eine einzige) Kommunikationseinheit 30 und/oder die Erfassungsvorrichtung 10 hierzu zumindest eine Verschlüsselungsvorrichtung 40. Die Verschlüsselungsvorrichtung 40 ist dabei zum Beispiel als integrierter Schaltkreis, insbesondere als Sicherheitschip ausgebildet. Bei der Übertragung über das Übertragungssystem 50 wird dabei die Information durch zumindest eine Übertragungsstation 51 des Fahrzeugs 1 übertragen. Das Übertragungssystem 50 ist bspw. als Bus-System des Fahrzeugs 1 ausgeführt. Die Übertragungsstation 51 ist dann bspw. ein Bus-Teilnehmer des Übertragungssystems 50.

Zur Durchführung der Abstandsermittlung kann bspw. die in den Figuren 8 und 9 gezeigte Verarbeitungsvorrichtung 60 genutzt werden, welche bspw. als eine zentrale Verarbeitungsvorrichtung 60 einer zentralen Fahrzeugelektronik des Fahrzeugs 1 ausgeführt ist. Somit ist die Verarbeitungsvorrichtung 60 beispielsweise zentral im Fahrzeug 1 vorgesehen. Die Verarbeitungsvorrichtung 60 kann bevorzugt (begrenzt) verteilt im Fahrzeug 1 angeordnet sein und mehrere Komponenten aufweisen. Alternativ ist es auch möglich, dass die Verarbeitungsvorrichtung 60 räumlich zentral im Fahrzeug 1, zum Beispiel als ein einziges Bauteil, angeordnet ist. Die Komponenten der Kommunikationsvorrichtung 20 und/oder der Erfassungsvorrichtung 10 können vorzugsweise verteilt im Fahrzeug angeordnet sein, wobei die Kommunikationseinheiten 30 (und/oder die jeweiligen Kommunikationsschnittstellen) jeweils getrennt voneinander angeordnet und/oder ausgebildet sein können. Auch hier ist es alternativ denkbar, dass die Kommunikationsvorrichtung 20 und/oder die Erfassungsvorrichtung 10 als ein räumlich begrenztes Bauteil im Fahrzeug 1 und/oder räumlich begrenzt im Fahrzeug 1 angeordnet und/oder ausgebildet ist. Die Zugehörigkeit der Kommunikationseinheiten 30 zur Kommunikationsvorrichtung 20 entspricht somit vorzugsweise einer rein funktionellen (logischen) Zugehörigkeit.

Alternativ oder zusätzlich kann eine Abstandsermittlung durch eine Erfassungsauswerteeinheit 11 der Erfassungsvorrichtung 10 und/oder der Kommunikationsvorrichtung 20 durchgeführt werden. Weiter weist die Erfassungsauswerteeinheit 11 und/oder die Verarbeitungsvorrichtung 60 bspw. Elektronikkomponenten wie integrierte Schaltkreise und/oder Prozessoren auf, um die Abstandsermittlung und/oder eine Auswertung der Abstandsinformation durchzuführen. Zur Auswertung der Abstandsinformation und/oder zur Abstandsermittlung umfasst die Verarbeitungsvorrichtung 60 insbesondere eine Auswertevorrichtung 61. Damit die Abstandsinformation ausgewertet werden kann, muss sie vorzugsweise zunächst entschlüsselt werden. Hierzu ist die Verarbeitungsvorrichtung 60 elektrisch, insbesondere elektronisch, mit einer Entschlüsselungsvorrichtung 62 verbunden. Selbstverständlich kann die Auswertevorrichtung 61 optional auch selbst die Entschlüsselung durchführen, sodass keine Entschlüsselungsvorrichtung 62 vorgesehen sein muss. Ebenso ist es denkbar, dass die Verarbeitungsvorrichtung 60 mit einer Datenspeichereinheit 63 elektrisch verbunden ist, wobei in der Datenspeichereinheit 63 für die Verarbeitungsvorrichtung 60 und/oder die Auswertevorrichtung 61 lesbar eine digitale Schlüsselinformation zur Entschlüsselung gespeichert ist. Die digitale Schlüsselinformation ist zum Beispiel ein kryptographischer Schlüssel. Die Auswertevorrichtung 61 und/oder die Entschlüsselungsvorrichtung 62 und/oder die Datenspeichereinheit 63 der Verarbeitungsvorrichtung 60 können dabei bevorzugt auf einer gemeinsamen Platine angeordnet und/oder elektrisch miteinander verbunden sein, wie bspw. aus Figur 9 schematisch hervorgeht. Dabei ist die Datenspeichereinheit 63 nur optional als separates Bauteil vorgesehen, was durch eine gestrichelte Linie in Figur 9 veranschaulicht wird. Alternativ kann die Datenspeichereinheit 63 auch in der Auswertevorrichtung 61 und/oder in der Entschlüsselungsvorrichtung 62, bspw. als Flash-Speicher, integriert sein.

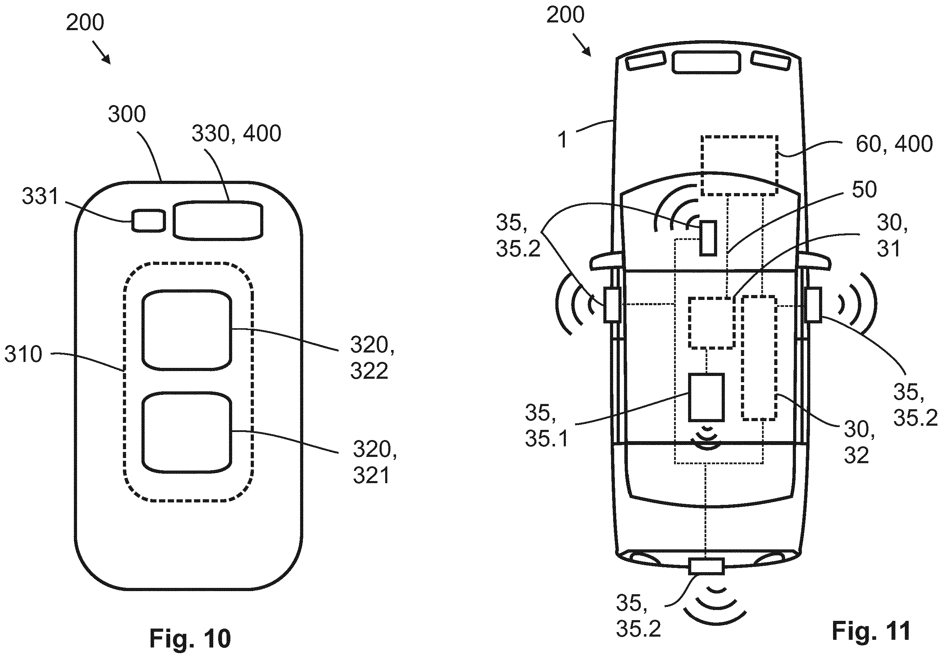

In Figur 10 ist ein schematischer Aufbau eines mobilen Identifikationsgebers 300 eines erfindungsgemäßen Sicherheitssystems 200 gezeigt. Der mobile Identifikationsgeber 300 umfasst dabei eine Sende-Empfangsvorrichtung 310, welche zur Kommunikation mit dem Fahrzeug 1, insbesondere mit der Kommunikationsvorrichtung 20, dient. Insbesondere weist die Sende-Empfangsvorrichtung 310 zumindest eine Sende-Empfangseinheit 320 auf, vorzugsweise eine erste Sende-Empfangseinheit 321 zur Durchführung einer ersten Kommunikation mit dem Fahrzeug 1 und eine zweite Sende-Empfangseinheit 322 zur Durchführung einer zweiten Kommunikation mit dem Fahrzeug 1. Selbstverständlich kann auch nur eine einzige (zum Beispiel erste) Sende-Empfangseinheit 320, 321 vorgesehen sein, sodass nur eine einzige (zum Beispiel erste) Kommunikation durchführbar ist. Die erste Sende-Empfangseinheit 321 ist bspw. zur Durchführung einer Ultrabreitbandkommunikation ausgeführt und/oder die zweite Sende-Empfangseinheit 322 ist bspw. zur Durchführung einer LF- und/oder HF-Kommunikation ausgeführt. Auf diese Weise können z. B. Kommunikationssignale S, insbesondere ein erstes Kommunikationssignal S1 und/oder ein zweites Kommunikationssignal S2, an die Kommunikationsvorrichtung 20 des Fahrzeugs 1 drahtlos übertragen werden. Die Übertragung kann bspw. verschlüsselt erfolgen, wobei hierzu eine Verschlüsselungseinheit 331 des Identifikationsgebers 300 vorgesehen und/oder elektrisch mit der Sende-Empfangsvorrichtung 310 (direkt oder indirekt) verbunden ist. Optional ist es denkbar, dass auch eine Abstandsermittlung durch den Identifikationsgeber 300 anhand des Kommunikationssignals S durchgeführt wird. Dazu wird bspw. eine Verarbeitungseinheit 330 als Abstandsermittlungsvorrichtung 400 genutzt.

Figur 11 zeigt eine Draufsicht auf ein Fahrzeug 1 welches ein erfindungsgemäßes Sicherheitssystem 200 aufweist. Das Sicherheitssystem 200 umfasst dabei mindestens eine Kommunikationsvorrichtung 20, welche zur Kommunikation mit einem Identifikationsgeber 300 dient. In Figur 11 sind dabei zwei verschiedene Kommunikationseinheiten 30 der Kommunikationsvorrichtung 20 gezeigt, wobei selbstverständlich auch nur eine einzige dieser Kommunikationseinheiten 30 vorgesehen sein kann. Um entsprechende Kommunikationssignale S durch die Kommunikationsvorrichtung 20 auszusenden, umfasst die Kommunikationsvorrichtung 20 und/oder die Kommunikationseinheit 30 zumindest ein Kommunikationsteil 35, welches bspw. als Antenne und/oder Satellit ausgeführt ist. So kann bspw. ein erstes Kommunikationsteil 35.1 an einem Dach des Fahrzeugs 1 angeordnet sein. Weiter ist es denkbar, dass auch weitere Kommunikationsteile 35, insbesondere ein zweites Kommunikationsteil 35.2, am Seitenbereich des Fahrzeugs 1 und/oder am Dach des Fahrzeugs 1 angeordnet sind. Auch ist es denkbar, dass neben dem ersten Kommunikationsteil 35.1 weitere erste Kommunikationsteile 35.1 am Fahrzeug 1 vorgesehen sind, welche jeweils zur ersten Kommunikation mit dem Identifikationsgeber 300 dienen. Hierzu ist das erste Kommunikationsteil 35.1 bzw. jedes erste Kommunikationsteil 35.1 elektrisch mit einer ersten Kommunikationseinheit 31 des Fahrzeugs 1 verbunden. Das zweite Kommunikationsteil 35.2 bzw. jedes zweite Kommunikationsteil 35.2 dient zur zweiten Kommunikation durch die zweite Kommunikationseinheit 32 und ist elektrisch mit der zweiten Kommunikationseinheit 32 des Fahrzeugs 1 verbunden. Die elektrische Verbindung des ersten Kommunikationsteils 35.1 mit der ersten Kommunikationseinheit 31 und/oder des zweiten Kommunikationsteils 35.2 mit der zweiten Kommunikationseinheit 32 erfolgt bspw. über elektrische Leitungen und/oder über ein Übertragungssystem 50, wobei insbesondere die über das Übertragungssystem 50 übertragenen Informationen verschlüsselt übertragen werden. Alternativ oder zusätzlich ist es möglich, dass die elektrische Verbindung zwischen der ersten Kommunikationseinheit 31 mit einer Verarbeitungsvorrichtung 60 und/oder die elektrische Verbindung der zweiten Kommunikationseinheit 32 mit der Verarbeitungsvorrichtung 60 über das Übertragungssystem 50 erfolgt. Auch hier können die Informationen, insbesondere die durch die erste Kommunikationseinheit 31 erfasste Abstandsinformation, verschlüsselt über das Übertragungssystem 50 an die Verarbeitungsvorrichtung 60 übertragen werden. Die Verarbeitungsvorrichtung 60 dient insbesondere als Abstandsermittlungsvorrichtung 400 zur (zusätzlichen) Bestimmung, Plausibilisierung und/oder Auswertung der Abstandsinformation. Durch die verschlüsselte Übertragung kann damit die Sicherheit der Abstandsermittlung und/oder der Auswertung der Abstandsinformation gewährleistet werden. Das erste Kommunikationsteil 35.1 und/oder das zweite Kommunikationsteil 35.2 sind bspw. als Antenne und/oder Sender und/oder Empfänger zur Kommunikation, insbesondere mittels eines UWB-Kommunikationsverfahren, ausgeführt. Bevorzugt ist dabei das erste Kommunikationsteil 35.1 und/oder das zweite Kommunikationsteil 35.2 asynchron (am Fahrzeug 1) angeordnet.

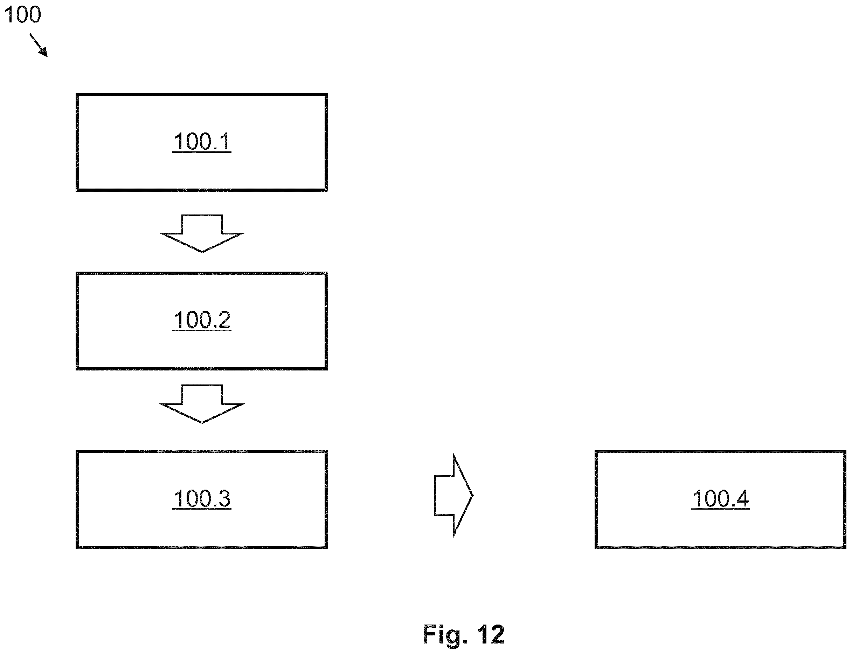

In Figur 12 ist schematisch ein erfindungsgemäßes Verfahren 100 visualisiert. Gemäß einem ersten Verfahrensschritt 100.1 wird zumindest eine Abstandsinformation über einen Abstand A eines mobilen Identifikationsgebers 300 zu dem Fahrzeug 1 durch eine Erfassungsvorrichtung 10 des Fahrzeugs 1 erfasst. Gemäß einem zweiten Verfahrensschritt 100.2 wird die Abstandsinformation durch eine Datenübertragung von der Erfassungsvorrichtung 10 über ein Übertragungssystem 50 des Fahrzeugs 1 an eine insbesondere zentrale Verarbeitungsvorrichtung 60 des Fahrzeugs 1 übertragen. Ferner wird optional gemäß einem dritten Verfahrensschritt 100.3 die Abstandsinformation durch die Verarbeitungsvorrichtung 60 ausgewertet, wodurch eine Lokalisierung des Identifikationsgebers 300 relativ zu mindestens einer Sicherheitszone Z des Fahrzeugs 1 in Abhängigkeit von der Abstandsinformation erfolgt. Gemäß einem optionalen vierten Verfahrensschritt 100.4 wird eine Sicherheitsinformation für das Sicherheitssystem 200 in Abhängigkeit von der Lokalisierung bestimmt.

Die voranstehende Erläuterung der Ausführungsformen beschreibt die vorliegende Erfindung ausschließlich im Rahmen von Beispielen.

### Bezugszeichenliste

- 1: Fahrzeug
- 2: Annäherungssensor

- 10: Erfassungsvorrichtung
- 11: Erfassungsauswerteeinheit

- 20: Kommunikationsvorrichtung

- 30: Kommunikationseinheit
- 31: erste Kommunikationseinheit
- 31.1: Kommunikationsschnittstelle, Ultrabreitband-Schnittstelle
- 31.2: Kommunikationsschnittstelle, Bluetooth-Schnittstelle
- 32: zweite Kommunikationseinheit
- 32.1: Kommunikationsschnittstelle, LF-Schnittstelle
- 32.2: Kommunikationsschnittstelle, HF-Schnittstelle
- 35: Kommunikationsteil, Antenne
- 35.1: erstes Kommunikationsteil
- 35.2: zweites Kommunikationsteil

- 40: Verschlüsslungsvorrichtung

- 50: Übertragungssystem
- 51: Übertragungsstation

- 60: Verarbeitungsvorrichtung
- 61: Auswertevorrichtung
- 62: Entschlüsselungsvorrichtung
- 63: Datenspeichereinheit

- 100: Verfahren
- 100.1: erster Verfahrensschritt
- 100.2: zweiter Verfahrensschritt
- 100.3: dritter Verfahrensschritt
- 100.4: vierter Verfahrensschritt

- 200: Sicherheitssystem

- 300: Identifikationsgeber
- 310: Sende-Empfangsvorrichtung

- 320: Sende-Empfangseinheit
- 321: erste Sende-Empfangseinheit
- 322: zweite Sende-Empfangseinheit
- 330: Verarbeitungseinheit
- 331: Verschlüsselungseinheit

- 400: Abstandsermittlungsvorrichtung

- A: Abstand
- K: Kommunikationsfeld
- S: Kommunikationssignal
- S1: erstes Kommunikationssignal einer ersten Kommunikation
- S2: zweites Kommunikationssignal einer zweiten Kommunikation
- Z: Sicherheitszone
- Z1: erste Sicherheitszone
- Z2: zweite Sicherheitszone
- Z3: dritte Sicherheitszone, Komfortzone

## Patentansprüche

1. Verfahren (100) für eine Aktivierung mindestens einer Sicherheitsfunktion eines Sicherheitssystems (200) eines Fahrzeuges (1),
**gekennzeichnet durch die nachfolgenden Schritte:**
a) Erfassen zumindest einer Abstandsinformation über einen Abstand (A) eines mobilen Identifikationsgebers (300) zu dem Fahrzeug (1) **durch** eine Erfassungsvorrichtung (10) des Fahrzeuges (1),
b) Übertragen der Abstandsinformation **durch** eine Datenübertragung von der Erfassungsvorrichtung (10) über ein Übertragungssystem (50) des Fahrzeuges (1) an eine Verarbeitungsvorrichtung (60) des Fahrzeuges (1),
wobei die Datenübertragung der Abstandsinformation fälschungssicher durchgeführt wird.

2. Verfahren (100) nach Anspruch 1,
**dadurch gekennzeichnet,**
**dass** die nachfolgenden Schritte nach Schritt b) durchgeführt werden:
c) Auswerten der Abstandsinformation durch die Verarbeitungsvorrichtung (60), wodurch eine Lokalisierung des Identifikationsgebers (300) relativ zu mindestens einer Sicherheitszone (Z) des Fahrzeuges (1) in Abhängigkeit von der Abstandsinformation erfolgt,
d) Bestimmen einer Sicherheitsinformation für das Sicherheitssystem (200) in Abhängigkeit von der Lokalisierung,
wobei die Datenübertragung der Abstandsinformation derart fälschungssicher durchgeführt wird, dass die Abstandsinformation für die Lokalisierung vor unberechtigter Manipulation geschützt wird.

3. Verfahren (100) nach Anspruch 1 oder 2,
**dadurch gekennzeichnet,**
**dass** wenigstens die Datenübertragung der Abstandsinformation von der Erfassungsvorrichtung (10) über das Übertragungssystem (50) an die Verarbeitungsvorrichtung (60) derart zumindest teilweise verschlüsselt durchgeführt wird, dass eine Entschlüsselung zur Auswertung der zumindest teilweise verschlüsselt übertragenen Abstandsinformation durch die Verarbeitungsvorrichtung (60) nur anhand einer Schlüsselinformation erfolgen kann, wobei bevorzugt die Schlüsselinformation durch die Verarbeitungsvorrichtung (60) und/oder einer Entschlüsselungsvorrichtung (62) ausgewertet wird,
und/oder dass eine Schlüsselinformation zum Entschlüsseln auslesegeschützt in einer nicht-flüchtigen Datenspeichereinheit (63) des Fahrzeuges (1) gespeichert ist, wobei die nicht-flüchtige Datenspeichereinheit (63) elektrisch mit der Verarbeitungsvorrichtung (60) und/oder einer Entschlüsselungsvorrichtung (62) verbunden ist.

4. Verfahren (100) nach einem der vorhergehenden Ansprüche,
**dadurch gekennzeichnet,**
**dass** vor Schritt a) zumindest einer der nachfolgenden Schritte vorgesehen ist:
- Durchführen einer Abstandsermittlung durch eine Verarbeitungseinheit (330) des Identifikationsgebers (300), wodurch die Abstandsinformation bestimmt wird,
- Übertragen der Abstandsinformation von dem Identifikationsgeber (300) an die Erfassungsvorrichtung (10) des Fahrzeuges (1), wobei die Übertragung der Abstandsinformation insbesondere verschlüsselt erfolgt,
und/oder dass vor Schritt a) der nachfolgende Schritt vorgesehen ist:
- Durchführen einer Abstandsermittlung durch die Erfassungsvorrichtung (10), bevorzugt durch eine Erfassungsauswerteeinheit (11) der Erfassungsvorrichtung (10), wodurch die Abstandsinformation bestimmt wird.

5. Verfahren (100) nach einem der vorhergehenden Ansprüche,
**dadurch gekennzeichnet,**
**dass** eine Übertragung der Abstandsinformation von dem Identifikationsgeber (300) an die Erfassungsvorrichtung (10) und/oder an die Verarbeitungsvorrichtung (60) des Fahrzeuges (1) derart verschlüsselt erfolgt, dass der Identifikationsgeber (300) eine Verschlüsselung anhand einer, vorzugsweise öffentlichen, ersten Schlüsselinformation durchführt, und die Erfassungsvorrichtung (10) und/oder die Verarbeitungsvorrichtung (60) die Entschlüsselung anhand einer, vorzugsweise geheimen, zweiten Schlüsselinformation durchführt, welche sich von der ersten Schlüsselinformation unterscheidet.

6. Verfahren (100) nach einem der vorhergehenden Ansprüche,
**dadurch gekennzeichnet,**
**dass** die Datenübertragung gemäß Schritt b) derart verschlüsselt erfolgt, dass die Erfassungsvorrichtung (10) eine Verschlüsselung anhand einer, vorzugsweise öffentlichen, ersten Schlüsselinformation durchführt, und die Verarbeitungsvorrichtung (60) die Entschlüsselung anhand einer, vorzugsweise geheimen, zweiten Schlüsselinformation durchführt, welche sich von der ersten Schlüsselinformation unterscheidet.

7. Verfahren (100) nach einem der vorhergehenden Ansprüche,
**dadurch gekennzeichnet,**
**dass** zumindest eine digitale Schlüsselinformation für die Verschlüsselung der Abstandsinformation vorgesehen ist und mindestens eine Schlüssellänge von 10 Bit bis 10000 Bit, vorzugsweise 512 Bit bis 4096 Bit, bevorzugt 1024 Bit bis 2048 Bit, aufweist, wobei besonders bevorzugt die Schlüsselinformation als kryptographischer Schlüssel für eine asymmetrische oder symmetrische Verschlüsselung zum Einsatz kommt.

8. Verfahren (100) nach einem der vorhergehenden Ansprüche,
**dadurch gekennzeichnet,**
**dass** zumindest eine Übertragung der Abstandsinformation derart verschlüsselt erfolgt, dass eine Schlüsselinformation zeitlich oder abwechselnd oder auf Basis eines kryptographischen Algorithmus verändert wird.

9. Verfahren (100) nach einem der vorhergehenden Ansprüche,
**dadurch gekennzeichnet,**
**dass** eine Abstandsermittlung durch eine Auswertung eines Kommunikationssignals (S) zur Kommunikation zwischen dem Identifikationsgeber (300) und dem Fahrzeug (1) durchgeführt wird, wobei durch die Abstandsermittlung der Abstand und/oder die Abstandsinformation bestimmt wird,
und/oder dass eine Abstandsermittlung durch eine Laufzeitanalyse eines Kommunikationssignals (S), vorzugsweise eines Ultrabreitbandsignals (S), einer Kommunikation zwischen einer Kommunikationseinheit (30) des Fahrzeuges (1) und einer Sende-Empfangseinheit (320) des Identifikationsgebers (300) durchgeführt wird, wobei bevorzugt die Erfassungsvorrichtung (10) die Kommunikationseinheit (30) umfasst.

10. Verfahren (100) nach einem der vorhergehenden Ansprüche,
**dadurch gekennzeichnet,**
**dass** zumindest eine Kommunikation zwischen dem Identifikationsgeber (300) und dem Fahrzeug (1) über mindestens ein Kommunikationssignal (S) als eine drahtlose Kommunikation durch zumindest eine der nachfolgenden Kommunikationstechnologien erfolgt:
- Bluetooth,
- Bluetooth Low Energy,
- Ultrabreitband,
und/oder dass durch eine Kommunikationsvorrichtung (20) des Fahrzeuges (1), insbesondere durch eine erste und/oder zweite Kommunikationseinheit (31, 32) der Kommunikationsvorrichtung (20), ein Kommunikationsfeld (K) mit einer Sicherheitszone (Z) erzeugt wird.

11. Mobiler Identifikationsgeber (300) für eine Aktivierung mindestens einer Sicherheitsfunktion eines Sicherheitssystems (200) eines Fahrzeuges (1) und zur Authentifizierung an dem Sicherheitssystem (200) des Fahrzeuges (1), wobei eine drahtlose Kommunikation zwischen dem Identifikationsgeber (300) und einer Kommunikationsvorrichtung (20) des Fahrzeuges (1) durchführbar ist,
**dadurch gekennzeichnet,**
**dass** eine Verschlüsselungseinheit (331) zur verschlüsselten Übertragung einer Abstandsinformation vorgesehen ist.

12. Mobiler Identifikationsgeber (300) nach Anspruch 11,
**dadurch gekennzeichnet,**
**dass** eine erste Sende-Empfangseinheit (321) und eine zweite Sende-Empfangseinheit (322) vorgesehen ist, wobei insbesondere die erste Sende-Empfangseinheit (321) eine Bluetooth- und/oder Bluetooth Low Energy- und/oder Ultrabreitband-Schnittstelle umfasst, und bevorzugt die zweite Sende-Empfangseinheit (322) eine LF- und/oder HF-Schnittstelle umfasst,
und/oder dass der mobile Identifikationsgeber (300) gemäß einem Verfahren (100) nach einem der vorhergehenden Ansprüche betreibbar ist.

13. Sicherheitssystem (200) für ein Fahrzeug (1), aufweisend:
- wenigstens eine Erfassungsvorrichtung (10) des Fahrzeuges (1) zur Erfassung zumindest einer Abstandsinformation über einen Abstand (A) eines mobilen Identifikationsgebers (300) zu dem Fahrzeug (1),
- wenigstens eine Verarbeitungsvorrichtung (60) des Fahrzeuges (1) zur Auswertung der Abstandsinformation,
- ein Übertragungssystem (50) des Fahrzeuges (1) zur Übertragung der Abstandsinformation durch eine Datenübertragung von der Erfassungsvorrichtung (10) an die Verarbeitungsvorrichtung (60),
wobei die Datenübertragung der Abstandsinformation fälschungssicher durchführbar ist.

14. Sicherheitssystem (200) nach Anspruch 13,
**dadurch gekennzeichnet,**
**dass** die Erfassungsvorrichtung (10) eine Kommunikationsvorrichtung (20) zur Kommunikation mit dem Identifikationsgeber (300) mit zumindest zwei Kommunikationseinheiten (30) am Fahrzeug (1) umfasst,
und/oder dass eine zweite Kommunikationseinheit (31) des Fahrzeuges (1) eine Bluetooth- und/oder LF- und/oder HF-Kommunikationsschnittstelle umfasst, welche sich zumindest teilweise von den Kommunikationsschnittstellen einer ersten Kommunikationseinheit (31) des Fahrzeuges (1) unterscheiden,
und/oder dass das Übertragungssystem (50) mindestens ein Bussystem umfasst, vorzugsweise ein LIN- und/oder CAN- und/oder SPI und/oder I2C-Bussystem, und bevorzugt eine Verschlüsslungsvorrichtung (40) umfasst oder mit der Verschlüsslungsvorrichtung (40) elektrisch verbunden ist.

15. Sicherheitssystem (200) nach einem der Ansprüche 13 oder 14,
**dadurch gekennzeichnet,**
**dass** die Erfassungsvorrichtung (10) mindestens ein Kommunikationsteil (35), insbesondere eine Antenne und/oder eine Satellitenkomponente, zum Senden und/oder zum Empfangen elektromagnetischer Wellen eines Kommunikationssignals (S) umfasst, wobei besonders bevorzugt die Abstandsinformation verschlüsselt von jedem der Kommunikationsteile (35) über das Übertragungssystem (50) an die Verarbeitungsvorrichtung (60) übertragbar ist,
und/oder dass mindestens ein Kommunikationsteil (35) am Dach des Fahrzeuges (1) angeordnet ist, wobei das Kommunikationsteil (35) mit einer Kommunikationsvorrichtung (20) des Fahrzeuges (1) elektrisch verbunden ist,
und/oder dass das Sicherheitssystem (200) gemäß einem Verfahren (100) nach einem der Ansprüche 1-10 betreibbar ist und/oder einen mobilen Identifikationsgeber (300) gemäß einem der Ansprüche 11 oder 12 umfasst.

## Claims

1. Method (100) for an activation of at least one safety function of a safety system (200) of a vehicle (1),
**characterized by the following steps:**
a) detecting at least one distance information about a distance (A) of a mobile identification transmitter (300) to the vehicle (1) by a detection device (10) of the vehicle (1),
b) transmitting the distance information by a data transmission from the detection device (10) via a transmission system (50) of the vehicle (1) to a processing device (60) of the vehicle (1),
wherein the data transmission of the distance information is carried out in a forgery-proof manner.

2. Method (100) according to claim 1,
**characterized in that**
the following steps are performed after step b):
c) evaluating the distance information by the processing device (60), whereby a localization of the identification transmitter (300) relative to at least one safety zone (Z) of the vehicle (1) is effected depending on the distance information,
d) determining a safety information for the safety system (200) depending on the localization,
wherein the data transmission of the distance information is carried out in such a forgery-proof manner that the distance information for the localization is protected against unauthorized manipulation.

3. Method (100) according to claim 1 or 2,
**characterized in that**
at least the data transmission of the distance information from the detection device (10) via the transmission system (50) to the processing device (60) is carried out at least partially encrypted in such a way that a decryption for evaluating the distance information transmitted at least partially encrypted can be carried out by the processing device (60) only on the basis of key information, wherein the key information is preferably evaluated by the processing device (60) and/or a decryption device (62),
and/or a key information for decryption is stored in a readout-protected manner in a non-volatile data storage unit (63) of the vehicle (1), wherein the non-volatile data storage unit (63) is electrically connected to the processing device (60) and/or a decryption device (62).

4. Method (100) according to one of the preceding claims,
**characterized in that**
before step a) at least one of the following steps is provided:
- performing a distance determination by a processing unit (330) of the identification transmitter (300), thereby determining the distance information,
- transmitting the distance information from the identification transmitter (300) to the detection device (10) of the vehicle (1), wherein the transmission of the distance information is in particular carried out in encrypted form,
and/or that before step a) the following step is provided:
- performing a distance determination by the detection device (10), preferably by a detection evaluation unit (11) of the detection device (10), whereby the distance information is determined.

5. Method (100) according to one of the preceding claims,
**characterized in that**
the distance information is transmitted from the identification transmitter (300) to the detection device (10) and/or to the processing device (60) of the vehicle (1) in encrypted form in such a way that the identification transmitter (300) carries out an encryption using a, preferably public, first key information, and the detection device (10) and/or the processing device (60) carries out the decryption using a, preferably secret, second key information which differs from the first key information.

6. Method (100) according to one of the preceding claims,
**characterized in that**
the data transmission according to step b) is carried out in encrypted form in such a way that the detection device (10) carries out an encryption using a, preferably public, first key information, and the processing device (60) carries out the decryption using a, preferably secret, second key information which is different from the first key information.

7. Method (100) according to one of the preceding claims,
**characterized in that**
at least one digital key information is provided for encrypting the distance information and comprises at least one key length of 10 bits to 10,000 bits, preferably 512 bits to 4096 bits, preferably 1024 bits to 2048 bits, wherein the key information is used particularly preferably as a cryptographic key for an asymmetrical or symmetrical encryption.

8. Method (100) according to one of the preceding claims,
**characterized in that**
at least one transmission of the distance information is carried out in encrypted form in such a way that a key information is changed chronologically or alternately or on the basis of a cryptographic algorithm.

9. Method (100) according to one of the preceding claims,
**characterized in that**
a distance determination is carried out by evaluating a communication signal (S) for communication between the identification transmitter (300) and the vehicle (1), wherein the distance and/or the distance information is determined by the distance determination, and/or a distance determination is carried out by means of a transit time analysis of a communication signal (S), preferably an ultra-wideband signal (S), of a communication between a communication unit (30) of the vehicle (1) and a transmission-receiving unit (320) of the identification transmitter (300), wherein the detection device (10) preferably comprises the communication unit (30).

10. Method (100) according to one of the preceding claims,
**characterized in that**
at least one communication between the identification transmitter (300) and the vehicle (1) is carried out via at least one communication signal (S) as a wireless communication by at least one of the following communication technologies:
- Bluetooth,
- Bluetooth Low Energy,
- ultra-wideband,
and/or a communication device (20) of the vehicle (1), in particular a first and/or second communication unit (31, 32) of the communication device (20), generates a communication field (K) with a safety zone (Z).

11. Mobile identification transmitter (300) an activation of at least one safety function of a safety system (200) of a vehicle (1) and for authentication on the safety system (200) of the vehicle (1), wherein a wireless communication between the identification transmitter (300) and a communication device (20) of the vehicle (1) can be carried out,
**characterized in that**
an encryption unit (331) is provided for the encrypted transmission of a distance information.

12. Mobile identification transmitter (300) according to claim 11,
**characterized in that**
a first transmission-receiving unit (321) and a second transmission-receiving unit (322) are provided, wherein in particular the first transmission-receiving unit (321) comprises a Bluetooth and/or Bluetooth Low Energy and/or ultra-wideband interface, and preferably the second transmission-receiving unit (322) comprises an LF and/or HF interface,
and/or the mobile identification transmitter (300) is operable in accordance with a method (100) according to one of the preceding claims.

13. Safety system (200) for a vehicle (1), comprising:
- at least one detection device (10) of the vehicle (1) for detecting at least one distance information about a distance (A) of a mobile identification transmitter (300) to the vehicle (1),
- at least one processing device (60) of the vehicle (1) for evaluating the distance information,
- a transmission system (50) of the vehicle (1) for transmitting the distance information by a data transmission from the detecting device (10) to the processing device (60),
wherein the data transmission of the distance information can be carried out in a forgery-proof manner.

14. Safety system (200) according to claim 13,
**characterized in that**
the detection device (10) comprises a communication device (20) for communication with the identification transmitter (300) with at least two communication units (30) on the vehicle (1),
and/or a second communication unit (31) of the vehicle (1) comprises a Bluetooth and/or LF and/or HF communication interface, which are at least partially different from the communication interfaces of a first communication unit (31) of the vehicle (1),
and/or the transmission system (50) comprises at least one bus system, preferably a LIN and/or CAN and/or SPI and/or I2C bus system, and preferably comprises an encryption device (40) or is electrically connected to the encryption device (40).

15. Safety system (200) according to one of claims 13 or 14,
**characterized in that**
the detection device (10) comprises at least one communication part (35), in particular an antenna and/or a satellite component, for transmitting and/or for receiving electromagnetic waves of a communication signal (S), wherein particularly preferably the distance information can be transmitted in encrypted form from each of the communication parts (35) to the processing device (60) via the transmission system (50),
and/or at least one communication part (35) is arranged on the roof of the vehicle (1), wherein the communication part (35) is electrically connected to a communication device (20) of the vehicle (1),
and/or the safety system (200) is operable in accordance with a method (100) according to one of claims 1-10 and/or comprises a mobile identification transmitter (300) according to one of claims 11 or 12.

## Revendications

1. Procédé (100) pour une activation d'au moins une fonction de sécurité d'un système de sécurité (200) d'un véhicule (1),
**caractérisé par les étapes suivantes :**
a) Détection d'au moins une information de distance sur une distance (A) d'un émetteur d'identification mobile (300) au véhicule (1) par un dispositif de détection (10) du véhicule (1),
b) Transmission de l'information de distance au moyen d'une transmission de données du dispositif de détection (10) à un dispositif de traitement (60) du véhicule (1) via un système de transmission (50) du véhicule (1),
dans lequel la transmission des données de l'information de distance est effectuée de manière infalsifiable.

2. Procédé (100) selon la revendication 1,
**caractérisé en ce que**
les étapes suivantes sont effectuées après l'étape b) :
c) évaluation de l'information de distance par le dispositif de traitement (60), une localisation de l'émetteur d'identification (300) par rapport à au moins une zone de sécurité (Z) du véhicule (1) étant effectuée en fonction de l'information de distance,
d) Détermination d'une information de sécurité pour le système de sécurité (200) en fonction de la localisation,
dans lequel la transmission des données de l'information de distance est effectuée de manière infalsifiable à ce que l'information de distance pour la localisation étant protégée contre toute manipulation non autorisée.

3. Procédé (100) selon la revendication 1 ou 2,
**caractérisé en ce qu'**
au moins la transmission de données de l'information de distance du dispositif de détection (10) au dispositif de traitement (60) par l'intermédiaire du système de transmission (50) est effectuée au moins partiellement cryptée de telle sorte qu'un décryptage pour l'évaluation de l'information de distance transmise au moins partiellement cryptées ne peut être effectué par le dispositif de traitement (60) que sur la base d'une information de clé, dans lequel l'information de clé est de préférence évaluée par le dispositif de traitement (60) et/ou un dispositif de décryptage (62),
et/ou l'information de clé pour le décryptage est stockée de manière protégée en lecture dans une unité de stockage de données non volatile (63) du véhicule (1), l'unité de stockage de données non volatile (63) étant reliée électriquement au dispositif de traitement (60) et/ou à un dispositif de décryptage (62).

4. Procédé (100) selon l'une des revendications précédentes,
**caractérisé en ce qu'**
au moins une des étapes suivantes est prévue avant l'étape a) :
- Exécution d'une détermination de la distance par une unité de traitement (330) de l'émetteur d'identification (300), déterminant ainsi l'information de distance,
- Transmission de l'information de distance de l'émetteur d'identification (300) au dispositif de détection (10) du véhicule (1), la transmission de l'information de distance étant en particulier cryptée,
et/ou l'étape suivante est prévue avant l'étape a):
- Exécution d'une détermination de la distance par le dispositif de détection (10), de préférence par une unité d'évaluation de détection (11) du dispositif de détection (10), déterminant ainsi l'information de distance.

5. Procédé (100) selon l'une des revendications précédentes,
**caractérisé en ce que**
l'information de distance est transmise de l'émetteur d'identification (300) au dispositif de détection (10) et/ou au dispositif de traitement (60) du véhicule (1) sous forme cryptée de telle sorte que l'émetteur d'identification (300) effectue un cryptage à l'aide d'une première information de clé, de préférence publique, et le dispositif de détection (10) et/ou le dispositif de traitement (60) effectue un décryptage à l'aide d'une deuxième information de clé, de préférence secrète, qui diffère de la première information de clé.

6. Procédé (100) selon l'une des revendications précédentes,
**caractérisé en ce que**
la transmission de données selon l'étape b) est cryptée de telle manière que le dispositif de détection (10) effectue un cryptage à l'aide d'une première information de clé, de préférence publique, et le dispositif de traitement (60) effectue le décryptage à l'aide d'une deuxième information de clé, de préférence secrète, qui diffère de la première information de clé.

7. Procédé (100) selon l'une des revendications précédentes,
**caractérisé en ce qu'**
au moins une information de clé numérique est prévue pour le cryptage de l'information de distance et présente au moins une longueur de clé de 10 bits à 10 000 bits, de préférence de 512 bits à 4096 bits, de préférence de 1024 bits à 2048 bits, l'information de clé étant utilisée de préférence comme clé cryptographique pour un cryptage asymétrique ou symétrique.

8. Procédé (100) selon l'une des revendications précédentes,
**caractérisé en ce qu'**
au moins une transmission de l'information de distance est cryptée de telle sorte que les l'information de clé est modifiée chronologiquement ou alternativement ou sur la base d'un algorithme cryptographique.

9. Procédé (100) selon l'une des revendications précédentes,
**caractérisé en ce qu'**
une détermination de la distance est effectuée en évaluant un signal de communication (S) pour la communication entre l'émetteur d'identification (300) et le véhicule (1), la distance et/ou l'information de distance étant déterminée par la détermination de la distance,
et/ou **en ce qu'**une détermination de la distance est effectuée au moyen d'une analyse du temps de transit d'un signal de communication (S), de préférence un signal à bande ultra-large (S), d'une communication entre une unité de communication (30) du véhicule (1) et une unité d'émission-réception (320) de l'émetteur d'identification (300), le dispositif de détection (10) comprenant de préférence l'unité de communication (30).

10. Procédé (100) selon l'une des revendications précédentes,
**caractérisé en ce qu'**
au moins une communication entre l'émetteur d'identification (300) et le véhicule (1) s'effectue par au moins un signal de communication (S) en tant que communication sans fil par au moins une des technologies de communication suivantes :
- Bluetooth,
- Bluetooth Low Energy,
- bande ultra-large,
et/ou **en ce qu'**un dispositif de communication (20) du véhicule (1), en particulier une première et/ou une deuxième unité de communication (31, 32) du dispositif de communication (20), génère un champ de communication (K) avec une zone de sécurité (Z).

11. Emetteur d'identification mobile (300) pour une activation d'au moins une fonction de sécurité d'un système de sécurité (200) d'un véhicule (1) et pour l'authentification sur le système de sécurité (200) du véhicule (1), dans lequel une communication sans fil entre l'émetteur d'identification (300) et un dispositif de communication (20) du véhicule (1) peut être effectuée,
**caractérisé en ce qu'**
une unité de cryptage (331) est prévue pour la transmission cryptée d'une information de distance.

12. Emetteur d'identification mobile (300) selon la revendication 11,
**caractérisé en ce qu'**
une première unité d'émission-réception (321) et une deuxième unité d'émission-réception (322) sont prévues, la première unité d'émission-réception (321) comprenant en particulier une interface Bluetooth et/ou Bluetooth Low Energy et/ou bande ultra-large, et de préférence la deuxième unité d'émission-réception (322) comprenant une interface LF et/ou HF,
et/ou **en ce que** l'émetteur d'identification mobile (300) est utilisable selon un procédé (100) selon l'une des revendications précédentes.

13. Système de sécurité (200) pour un véhicule (1), comprenant :
- au moins un dispositif de détection (10) du véhicule (1) pour détecter au moins une information de distance sur une distance (A) d'un émetteur d'identification mobile (300) par rapport au véhicule (1),
- au moins un dispositif de traitement (60) du véhicule (1) pour évaluer l'information de distance,
- un système de transmission (50) du véhicule (1) pour transmettre l'information de distance par une transmission de données du dispositif de détection (10) au dispositif de traitement (60),
la transmission des données de l'information de distance peut être effectuée de manière infalsifiable.

14. Système de sécurité (200) selon la revendication 13,
**caractérisé en ce que**
le dispositif de détection (10) comprend un dispositif de communication (20) pour la communication avec l'émetteur d'identification (300) avec au moins deux unités de communication (30) sur le véhicule (1),
et/ou qu'une deuxième unité de communication (31) du véhicule (1) comprend une interface de communication Bluetooth et/ou LF et/ou HF, qui sont au moins partiellement différentes des interfaces de communication d'une première unité de communication (31) du véhicule (1),
et/ou que le système de transmission (50) comprend au moins un système de bus, de préférence un système de bus LIN et/ou CAN et/ou SPI et/ou I2C, et comprend de préférence un dispositif de cryptage (40) ou est relié électriquement au dispositif de cryptage (40).

15. Système de sécurité (200) selon l'une des revendications 13 ou 14,
**caractérisé en ce que**
le dispositif de détection (10) comprend au moins une partie de communication (35), en particulier une antenne et/ou un composant de satellite, pour l'émission et/ou la réception d'ondes électromagnétiques d'un signal de communication (S), l'information de distance peut être transmise de manière particulièrement préférée sous forme cryptée de chacune des parties de communication (35) au dispositif de traitement (60) par l'intermédiaire du système de transmission (50),
et/ou qu'au moins une partie de communication (35) est disposée sur le toit du véhicule (1), la partie de communication (35) étant reliée électriquement à un dispositif de communication (20) du véhicule (1),
et/ou que le système de sécurité (200) est utilisable selon un procédé (100) selon l'une des revendications 1 à 10 et/ou comprend un émetteur d'identification mobile (300) selon l'une des revendications 11 ou 12.
